# EUROPÄISCHE PATENTSCHRIFT

(11) **EP 1 748 961 B1**
(45) Veröffentlichungstag und Bekanntmachung des Hinweises auf die Patenterteilung: **14.01.2015**
(21) Anmeldenummer: 05742706.4
(22) Anmeldetag: 09.05.2005
(51) Int. Cl.: C02F 3/32

(54) **PFLANZENKLÄRANLAGE ZUM REINIGEN VON ABWASSER**
WASTE WATER PURIFICATION PLANT BY MEANS OF PLANTS
INSTALLATION D'EPURATION D'EAUX USEES PAR LES PLANTES

(30) Priorität: 07.05.2004 DE 102004023170; 11.06.2004 DE 102004028250; 06.07.2004 DE 102004032644; 03.11.2004 DE 102004052813; 25.11.2004 WO PCT/EP2004/053100; 12.04.2005 DE 102005016874
(43) Veröffentlichungstag der Anmeldung: 07.02.2007
(73) Patentinhaber: Deere & Company, Moline, IL 61265-8098 (US)
(72) Erfinder: BAUER, Hartmut, 67136 Fussgönheim (DE); KOZIANKA, Frank, 68519 Viernheim (DE); ENDISCH, Sandra, 68169 Mannheim (DE)
(74) Vertreter: Magin, Ludwig Bernhard
(86) Internationale Anmeldenummer: PCT/EP2005/052081
(87) Internationale Veröffentlichungsnummer: WO 2005/108310

(56) Entgegenhaltungen:
- WO-A-01/27039
- WO-A-99/32406
- DE-A1- 19 630 830
- DE-A1- 19 630 831
- DE-A1- 19 750 276
- GB-A- 2 375 761
- US-A- 4 333 837
- US-B1- 6 406 627

## Beschreibung

Die Erfindung betrifft eine Pflanzenkläranlage zum Reinigen von Abwasser und ein Verfahren zum Reinigen von Abwasser.

In vielen industriellen Unternehmen entstehen produktionsbedingt verschiedene Abwässer. Normalerweise wird Abwasser durch technische Verfahren in Kläranlagen gereinigt. Zur Reinigung von kleineren Abwasserströmen bzw. Abwassermengen werden schon seit längerer Zeit alternativ zu beispielsweise herkömmlichen Kläranlagen so genannte naturnahe Verfahren eingesetzt. Beim Einsatz von naturnahen Verfahren werden die Selbstreinigungsmechanismen der Natur genutzt und zudem neue Feuchtbiotope und Grünflächen geschaffen. Außerdem sind solche naturnahen Verfahren mit erheblicher Kostenersparnis verbunden.

Pflanzenkläranlagen, wie sie schon vielerorts verwendet werden, gehören zu diesen naturnahen Verfahren. Eine Pflanzenkläranlage beruht auf einer biologischen Symbiose zwischen speziell gezüchteten Wasserpflanzen und Mikroorganismen, wie zum Beispiel Bakterien, Pilze und Algen.

Bisherige Pflanzenkläranlagen werden hauptsächlich von privaten Haushalten und Kommunen betrieben und werden zumeist dort eingesetzt, wo ein Anschluss an eine zentrale Abwasserreinigung zu kostenintensiv ist. Bei diesen Anlagen sind die Pflanzen auf Erde, Kies oder Sand (d.h. in einem Substrat) gepflanzt. Üblicherweise benötigen die Pflanzenkläranlagen jedoch verhältnismäßig große Flächen, die insbesondere in Industriebetrieben meistens nicht vorhanden sind. Lediglich beispielhaft wird auf die DE 196 30 831 C2 verwiesen, aus welcher eine Pflanzenkläranlage bekannt ist. Der vorliegenden Erfindung liegt daher die Aufgabe zugrunde, eine Pflanzenkläranlage und ein Verfahren zum Reinigen von Abwasser der eingangs genannten Art anzugeben und weiterzubilden, durch welches die vorgenannten Probleme überwunden werden. Insbesondere soll es möglich sein, mit der Pflanzenkläranlage industrielles und/oder sanitäres Abwasser zu reinigen, sie soll also für Industriebetriebe und/oder private Haushalte einsetzbar sein. Ganz besonders bevorzugt soll mit der Pflanzenkläranlage das zu reinigende Abwasser einen hohen Reinheitsgrad aufweisen, beispielsweise den von Trinkwasser.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß umfasst eine Pflanzenkläranlage der eingangs genannten Art mindestens einen Pflanzenbehälter, eine Zuführeinheit, eine Abführeinheit und Pflanzen. Mit der Zuführeinheit ist zu reinigendes Abwasser der Pflanzenkläranlage zuführbar. Mit der Abführeinheit ist gereinigtes Abwasser von der Pflanzenkläranlage abführbar. Die Pflanzen sind in dem Pflanzenbehälter angeordnet und derart ausgebildet, dass sie in dem Pflanzenbehälter ohne Substrat angeordnet sind. Ein Pflanzenbehälter weist vorzugsweise mindestens zwei Pflanzenbecken auf. Mindestens ein weiterer Behälter kann vorgesehen sein. Zumindest ein Teil des Pflanzenbehälters ist auf einem Gebäudedach angeordnet. In dem Pflanzenbehälter sind Pflanzen mindestens zwei unterschiedlicher Pflanzensorten vorgesehen. In Abhängigkeit der Art des Abwassers - beispielsweise industrielles und/oder sanitäres Abwasser - ist das zu reinigende Abwasser in einer vorgebbaren Reihenfolge von Pflanzen unterschiedlicher Pflanzensorten reinigbar.

Es werden Pflanzen eingesetzt, deren Wurzeln sich nach spezieller Züchtung so ausgebildet haben, dass sie zunächst ohne Substrat im Wasser sich an einer definierten Stelle befinden und dort stehen, auf dem Boden des Pflanzenbehälters. Falls der Pflanzenbehälter mit einer Teichfolie versehen ist, stehen die Pflanzen direkt auf dieser Teichfolie. Diese Pflanzen reinigen das durch den Pflanzenbehälter geleitete Abwasser in ihrem Wurzelraum in Symbiose mit den dort lebenden Mikroorganismen. Im Laufe der Zeit können sich Ablagerungen bilden, die jedoch nicht unter den Begriff "Substrat" im Sinn der vorliegenden Erfindung zu sehen sind. Unter dem Begriff "Substrat" im Sinn der vorliegenden Erfindung ist vielmehr ein Bodensystem mit einem natürlichen Bodenkörper im Sinne von Kickuth, siehe beispielsweise ATV-Handbuch, "Biologische und weitergehende Abwasserreinigung", Ernst & Sohn, Berlin, 4. Auflage, 1997, bzw. ein künstlich zusammengesetzter Bodenkörper aus verschiedenen Komponenten zu verstehen. Die Ablagerungen hingegen können von Zeit zu Zeit entfernt werden. Die geeigneten Pflanzen werden derart ausgebildet, dass sie an die klimatischen Verhältnisse und an die Abwassereigenschaften angepasst sind.

Grundsätzlich könnte das Gebäudedach ein Flachdach oder ein Spitzdach aufweisen. Ein Gebäudedach in Form eines Flachdaches wird üblicherweise bei Industriehallen oder Bungalows, ein Gebäudedach in Form eines Spitzdaches insbesondere bei privaten Wohnhäusern vorliegen. Dementsprechend ist vorgesehen, die erfindungsgemäße Pflanzenkläranlage sowohl in industriellen als auch im privaten Bereich einzusetzen beziehungsweise zu nutzen.

GB 2375761 beschreibt eine Dachpflanzenkläranlage.

Ganz besonders bevorzugt betrifft die vorliegende Erfindung eine Pflanzenkläranlage zum Reinigen von Abwasser, wie sie in den Patentanmeldungen mit den amtlichen Aktenzeichen DE 10 2004 023 170, PCT/EP2004/053100, DE 10 2004 028 250, DE 10 2004 032 644, DE 10 2004 052 813 und DE 10 2005 016 874 offenbart sind, wobei der Offenbarungsgehalt dieser Patentanmeldungen vollumfänglich hier einzufügen ist und auf welchen im folgenden Bezug genommen wird.

Idealerweise werden die Pflanzen unterschiedlicher Pflanzensorten in einer geeigneten Reihenfolge in den Becken angeordnet, wobei die Reihenfolge der Anordnung der Pflanzen der unterschiedlichen Pflanzensorten speziell auf die Eigenschaften - z.B. den Verschmutzungsgrad, den pH-Wert, den Salzgehalt und/oder den Schwermetallanteil - des zu reinigenden Abwassers ausgerichtet sein können. Die Reihenfolge der Pflanzensorten ist hierbei auf die Art des zu reinigenden Abwassers abgestimmt, um nämlich möglichst viel Schadstoffe, Schwermetalle und sonstige chemische Verbindungen aus dem zu reinigenden Abwasser abzubauen. Dementsprechend könnte die erfindungsgemäße Pflanzenkläranlage in ihrer Anordnung der Reihenfolge der unterschiedlichen Pflanzensorten speziell auf eine bestimmte Art von Abwasser konfiguriert werden, wobei dann lediglich Abwasser dieser Art von der Pflanzenkläranlage gereinigt wird. Alternativ hierzu könnte die erfindungsgemäße Pflanzenkläranlage derart ausgestaltet sein, dass mit ihr Abwasser unterschiedlicher Art gereinigt werden kann, beispielsweise dadurch, dass das jeweils zu reinigende Abwasser in einer variierbaren Reihenfolge an Pflanzen unterschiedlicher Pflanzensorten vorbeigeleitet wird bzw. von den entsprechenden Pflanzen gereinigt wird. Somit ergibt sich in ganz besonders vorteilhafter Weise eine Pflanzenkläranlage, die flexibel für Abwasser unterschiedlichster Art einsetzbar ist, so dass beispielsweise an einem Tag lediglich sanitäres Abwasser und in einem darauf folgenden Zeitraum lediglich industrielles Abwasser gereinigt werden kann.

Ganz besonders bevorzugt sind für die erfindungsgemäße Pflanzenkläranlage Pflanzen der im Folgenden angegebenen Pflanzensorten vorgesehen: Carex Riparia und/oder Carex Elata und/oder Carex Gracilis und/oder Juncus Inflexus und/oder Carex Acutiformis und/oder Scirpus Lacustris und/oder Iris Pseudacorus und/oder Carex Rostrata und/oder Phragmitis Australis und/oder F2, wobei die F2 eine Kreuzung aus der Carex Gracilis und der Carex Elata ist.

Einige Eigenschaften der Pflanzen der Pflanzensorte Carex Riparia (Ufersegge) sind im folgenden aufgeführt:

Phosphatelimination: Für die Phosphatelimination in einem Abwasserstrom ist hauptsächlich die Carex Riparia verantwortlich. Bei einem Volumenstrom von ca. 1,2 m³/h zugeführter Abwassermenge kann mit dieser Pflanze, durchschnittlich 21 % tagsüber und 40 % nachts Phosphate eliminiert bzw. abgebaut werden. Dies entspricht einer effektiven Phosphatelimination von 300 bis 1000 mg/l. Die hier angegebenen Messwerte beziehen sich auf eine exemplarische Pflanzenkläranlage, welche eine wirksame Oberfläche von ca. 140 m² bei einer Durchflussgeschwindigkeit von 1,2 m³/h aufweist.

CSB Abbau (CSB = Chemischer-Sauerstoff-Bedarf): Die Carex Riparia ist in der Lage den CSB-Gehalt des Abwasserstroms um 40% tags und 13 % nachts zu reduzieren. Dies entspricht einer Verringerung von 200 bis 500 mg/l. Es kann davon ausgegangen werden, dass es sich hierbei hauptsächlich um leicht abbaubare Kohlenstoffverbindungen handelt.

H18 ( = Messverfahren zu Bestimmung von Öl im Wasser): Unter normalen Bedingungen kann die Carex Riparia 3 mg/l schwerlösliche Mineralölkohlenstoffe so umwandeln, dass sie von den Pflanzen aufgenommen werden können. Unter Störfallbedingungen (H18-Störfall) zeigt sie auch hervorragende Eigenschaften und ist in der Lage, diese Stossbelastung bis zu einem gewissen Grad aufzufangen und zu bewältigen, ohne Schaden zu nehmen (H18-Elimination bzw. Aufnahme/Puffern von ca. 500 mg/l).

Sauerstoffeintrag: Bei Messungen hat sich gezeigt, dass der Sauerstoffgehalt im Abwasser ausreicht, aerobe Bedingungen im Becken aufrechtzuerhalten, und zwar sowohl im Tag- als auch im Nachtbetrieb. Bei den Messungen lag der Sättigungsgrad des Abwassers zwischen 30 bis 50 %, sowohl tags über als auch nachts.

Aufgrund dieser Eigenschaften ist es vorteilhaft, die Carex Riparia an einem Einlauf eines Hauptbeckens bzw. Pflanzenbeckens der erfindungsgemäßen Pflanzenkläranlage zu positionieren. Weiterhin hat sich gezeigt, dass die Carex Riparia von den untersuchten Carexarten den besten Sauerstoffeintrag in das System einbringt (3,89 bis 4,76 mg/l). Sie bildet auch einen geschlossenen Wurzelteppich aus, mit einem ausgeprägten Biofilm in den mittleren Wurzelbereichen. Somit ist die Flächenbildung bei dieser Pflanze besonders ausgeprägt. Die Dicke des Biofilms kann z.B. mit der von der Carex Paniculata verglichen werden.

In einer Pflanzenkläranlage zu sanitären Zwecken spielt die Carex Elata (Steife Segge) eine wichtige Rolle. Sie hat folgende Eigenschaften:
▪ wächst und ist auch im Schatten / Halbschatten einsetzbar
▪ Sauerstoffeintrag: geschnitten 3,71 mg/l, ungeschnitten 3,61 mg/l [Sat03]. Anhand dieser Werte wird deutlich, dass der Prozess der Fotosynthese der Pflanzen keinen wesentlichen Einfluss auf den Sauerstoffeintrag nimmt.
▪ Speicherung von Nährstoffen
▪ Spaltung von C-Verbindungen (Kohlenstoff-Verbindungen)
▪ Ammonium-Abbau: ca. 50%
▪ Nitrat-Abbau: ca.70%
▪ Nitrit-Abbau: ca. 30%
▪ Abbaurate Krankheitserreger: ca. 50%

Mit der Abkürzung [Sat03] ist die Arbeit von Miriam Sartor mit dem Titel "Energiebilanzierung für eine Dach-Pflanzenabwasser-Reinigungsanlage ohne Bodenkörper (PWTR) unter Berücksichtigung der durch die Phytolysepflanzen^{®} eingetragenen Sauerstoffmenge" der Abteilung Umweltschutz, John Deere Werke Mannheim, 2003, bezeichnet.

Die Pflanze Carex Elata ist für den Abbau von Stickstoffverbindungen und gleichzeitig für die Reduktion von Krankheitserregern sehr gut geeignet. Der Sauerstoffeintrag ist im Mittel (0,23 mg/lh = 0,23 Milligramm /(Liter * Stunde)). Sie könnte zusammen mit der Carex Rostrata eingesetzt werden und kompensiert dann das Sauerstoff-Defizit und verhindert dadurch, dass anaerobe Bedingungen gefördert werden. Sie ist in der Lage, Stoßbelastungen aufzufangen und abzubauen.

Die Pflanzen der Pflanzensorte Juncus Inflexus - z.B. die Blaugrüne Binse - weisen die im Folgenden angegebenen Eigenschaften auf:
▪ Sauerstoffeintrag: geschnitten 6,40 mg/l, ungeschnitten 5,60 mg/l [Sat03]
▪ Vorteil: Sie kann Sauerstoff (O₂) über die Halme direkt ins Wasser (H₂O) überführen und Ballaststoffe wie Phenole, Phosphate, NaCl und andere Salze aufnehmen und/oder umwandeln und/oder abbauen und auch in die Atmosphäre abgeben.
▪ Es liegt zu keiner Jahreszeit ein vollständiger Wachstumsstillstand vor.
▪ anpassungsfähig an die verschiedensten Abwasserraten
▪ Eliminierung von Krankheitserreger: ca. 80 % [Sei78]
▪ Ammonium-Abbau: ca. 40 %
▪ CSB-Abbau: ca. 30 %

Mit der Abkürzung [Sei78] sind die "Beiträge zur Gewässergesundung" der Autoren Seidel, K.; H. Happel; G. Graue, Stiftung Limnologische Arbeitsgruppe Dr. Seidel e.V., Krefeld-Hülserberg, 2. Auflage, 1978, bezeichnet.

Die Pflanze Juncus Inflexus kann in einem der ersten Becken einer Pflanzenkläranlage aufgrund ihres hohen Sauerstoffeintrags und der hohen Reduzierung von Krankheitserregern eingesetzt werden. Sie hat den höchsten Sauerstoffeintrag (18 mg/lh). Im Laufe der Zeit lagert allerdings die Juncus Inflexus Feststoffe bzw. Biomasse im Becken ab, da der Boden nicht vollständig mit Wurzelteller bedeckt ist. Dadurch werden dann weniger Schadstoffe abgebaut. Es sollte daher von Zeit zu Zeit eine Reinigung des entsprechenden Beckens erfolgen.

Die Pflanzen der Pflanzensorte Carex Acutiformis weisen unter anderem einen niedrigen Sauerstoffeintrag auf, der bei geschnittenen Pflanzen 2,52 mg/l und bei ungeschnitten Pflanzen 3,03 mg/l beträgt [Sat03]. Zu der Pflanze Carex Acutiformis kann bislang keine positive Aussage getroffen werden, da sie zu keinem Zeitpunkt eine nennenswerte positive Abbaurate chemischer Parameter zeigte. Daher könnte diese Pflanze beispielsweise aus einer sanitären Pflanzenkläranlage zu entfernen sein. Aufgrund eines geringen Sauerstoffeintrags (0,15 mg/lh) kann sie mit der Iris Pseudacorus eingesetzt werden.

Die Pflanzen der Pflanzensorte Iris Pseudacorus weisen folgende Eigenschaften auf:
▪ Hoher Sauerstoffeintrag: geschnitten 6,06 mg/l, ungeschnitten 4,88 mg/l [Sat03]
▪ Eliminierung von Phosphat: ca. 50 %
▪ Nitrit-Abbau: ca. 55 %
▪ CSB-Abbau: ca. 50 %
▪ Abbau von E.Coli: ca. 50 % [Sei78]
▪ Abbau von Enterokokken: ca. 20 % [Sei78]

Die Pflanze Iris Pseudacorus könnte somit hauptsächlich wegen ihrer Eigenschaften des guten Abbaus von E.Coli und durchgängig gutem Abbau von Nitrit in einer sanitär genutzten Pflanzenkläranlage eingesetzt werden. Aufgrund ihres hohen Sauerstoffeintrags kann sie insbesondere in Kombination mit Pflanzen mit niedrigem Sauerstoffeintrag genutzt werden. Die Pflanze Iris Pseudacorus hat einen sehr, sehr hohen Sauerstoffeintrag (1,92 mg/lh) und wird daher in Kombination mit der einen schlechten Sauerstoffeintrag aufweisenden Carex Acutiformis eingesetzt. Die Abbauleistung der Iris Pseudacorus ist hervorragend. Außerdem kann sie Phosphat eliminieren. Sie ist allerdings giftig.

Bei der Pflanzensorte F2 - sie wird auch Gracel genannt - handelt es sich um eine Kreuzung aus der Carex Gracilis (Schlanke - Segge) (Mutter) [Bestandbildend] und der Carex Elata (Steife Segge) (Vater) [Hostbildend]. Ihre Eigenschaften sind unter anderem:
▪ mittlerer Sauerstoffeintrag
▪ Abbau von Ammonium: ca. 50 %
▪ Abbau von Nitrat: ca. 71 %
▪ Abbau von Nitrit: ca. 33%
▪ Abbau von CSB: ca. 40 %

Die F2 ist für den Abbau von Stickstoffverbindungen und der Reduzierung des CSBs sehr gut geeignet. Die Abbauleistung von F2 könnte sich insbesondere auch auf mikrobiologische Parameter erstrecken.

Die Scirpus Lacustris oder Flechtsimse wird neuerdings auch mit dem Namen Schoenoplectus Lacustris bezeichnet. Ihre Eigenschaften können wie folgt zusammengefasst werden:
▪ Anreicherung der Umgebung mit Bakterien und Humus
▪ Abbau von Krankheitserregern (E.coli, coliforme Bakterien): ca. 80 % [Sei78]
▪ Abgabe von Antibiotika [Sei78]
▪ Einsatz in geringer Wassertiefe [Sei78]
▪ hält Biotop sauber
▪ Aufnahme von Schwermetallen (Einsatz: für Industrieabwässer)
▪ Speicherung von Nährstoffen
▪ Spaltung von C-Verbindungen ( Kohlenstoff-Verbindungen )
▪ Abbau von Kohlenwasserstoffen

Bei der Scirpus Lacustris wird vermutet, dass sie einen sehr guten Abbau von Krankheitserregern und eine positive Eliminierung von Phosphat aufweist. Die Pflanze Scirpus Lacustris kann Schwermetalle (z.B. Phosphat) aufnehmen, Nährstoffe speichern und Kohlenstoff-Verbindungen spalten. Außerdem kann sie Kohlenwasserstoffe abbauen und ist geeignet für eine geringe Wassertiefe. Sie hält durch ihre Reinigungswirkung das Biotop sauber.

Im Folgenden sind noch die Eigenschaften weiterer Pflanzensorten aufgeführt, welche zum Einsatz in Pflanzenkläranlagen genutzt werden können, sei es zur Klärung von sanitären und/oder industriellen Abwasser:
Carex Rostrata (Schnabelsegge): könnte z.B. kombiniert mit der Carex Elata eingesetzt werden, da die Carex Rostrata mit den geringsten Sauerstoffeintrag hat (0,17 mg/lh);
Phragmites Communis (Schilf): bringt auch Sauerstoff ins Abwasser und ist in der Lage, bestimmte organische Verbindungen zu spalten;
Carex Paniculata (Rispensegge): hat einen schlechten Sauerstoffeintrag (0,16 mg/lh), dafür aber eine große Wasseraufnahmefähigkeit und damit eine große Verdunstungsrate. Dadurch kann das Abwasser drastisch reduziert werden. Dies könnte allerdings einerseits die Pflanzenkläranlage zumindest bereichsweise austrocknen, wenn es sowieso schon wenig Abwasser gibt. Andererseits könnte dies eine "Aufkonzentration" des zu reinigenden Abwassers bewirken, d.h. die Überschreitung einer gegebenenfalls vorgegebenen Schadstoffgrenze. Die Carex Paniculata wächst jedoch sehr stark und wird dadurch sehr schwer, was insbesondere bei auf Dächern von Gebäuden angeordneten Pflanzenkläranlagen aus Gründen der Statik problematisch ist.

Zum Reinigen von sanitärem Abwasser ist in einer bevorzugten Ausführungsform einer erfindungsgemäßen Pflanzenkläranlage die Reihenfolge von Pflanzen unterschiedlicher Pflanzensorten die folgende: (a) Juncus Inflexus, (b) Iris Pseudacorus, (c) F2, (d) Carex Elata, (e) Scirpus Lacustris, (f) Iris Pseudacorus. Die Pflanzen der Pflanzensorten (e) Scirpus Lacustris und (f) Iris Pseudacorus könnten hierbei miteinander gemischt angeordnet sein. Weiterhin könnten den Pflanzen der Pflanzensorte Juncus Inflexus Pflanzen der Pflanzensorte Carex Acutiformis nachgeordnet sein und/oder die Pflanzen der Pflanzensorte Juncus Inflexus und die Pflanzen der Pflanzensorte Carex Acutiformis könnten miteinander gemischt angeordnet sein.

Zum Reinigen von industriellem Abwasser ist in einer ebenfalls bevorzugten Ausführungsform einer anderen erfindungsgemäßen Pflanzenkläranlage die Reihenfolge von Pflanzen unterschiedlicher Pflanzensorten wie folgt vorgesehen: (a) Carex Riparia, (b) Carex Elata, (c) Carex Rostrata, (d) Iris Pseudacorus, (e) Juncus Inflexus, (f) Scirpus Lacustris, (g) Iris Pseudacorus und gegebenenfalls (h) F2. Hierbei könnten die Pflanzen der Pflanzensorten (b) Carex Elata und (c) Carex Rostrata miteinander gemischt angeordnet sein. Auch könnten die Pflanzen der Pflanzensorten (f) Scirpus Lacustris und (g) Iris Pseudacorus miteinander gemischt angeordnet sein. Zu den Pflanzen der Pflanzensorte (d) Iris Pseudacorus könnten zusätzlich Pflanzen der Pflanzensorte Carex Acutiformis - vorzugsweise im Anzahlverhältnis von 1:4 - vorgesehen sein.

Es könnten die Pflanzen der oben genannten unterschiedlichen Pflanzensorten in einem einzigen Pflanzenbehälter angeordnet sein, und gegebenenfalls in Strömungsrichtung bzw. Fließrichtung des zu reinigenden Abwassers voneinander beabstandet angeordnet sein. Mit anderen Worten ist eine getrennte Anordnung der Pflanzen unterschiedlicher Pflanzensorten in jeweils ein Pflanzenbecken nicht zwingend erforderlich, um eine bestimmte Reinigungswirkung zu erzielen.

Eine weitere erfindungsgemäße Pflanzenkläranlage könnte für einen Volumenstrom von ca. 1,2 m³ Abwasser pro Stunde ausgelegt sein und folgendermaßen realisiert sein:

Der Pflanzenbehälter weist - vergleichbar zu dem gemäß Figur 5 der DE 10 2004 023 170.2 - mindestens sechs Pflanzenbecken auf, wobei jedes der Pflanzenbecken mindestens eine Oberfläche von 15 m² aufweist. Die einzelnen Pflanzenbecken sind hinsichtlich der Durchströmungsrichtung des zu reinigenden Abwassers hintereinander angeordnet und weisen die folgende Pflanzenbestückung auf:

| | |
|---|---|
| Becken 1: | Carex Riparia |
| Becken 2: | Carex Riparia |
| Becken 3: | Carex Elata / Carex Rostrata |
| Becken 4: | Iris Pseudacorus |
| Becken 5: | Juncus Inflexus |
| Becken 6: | Scirpus Lacustris / Iris Pseudacorus |
| Optional: | |
| Becken 7: | F2 |

Grundsätzlich ist der Aufbau dieser Pflanzenkläranlage mit dem der Figur 5 aus der deutschen Patentanmeldung mit dem amtlichen Aktenzeichen DE 10 2004 023 170.2 vergleichbar, wenn auch die ein oder andere Pflanzenreihe nunmehr gemäß der obigen Aufzählung ausgebildet ist.

Das Kernstück dieser konkreten Pflanzenkläranlage stellt die Carex Riparia dar. Hierbei handelt es sich um den Hauptleistungsträger.

Aufbauend auf den günstigen Eigenschaften der Carex Riparia wird eine kombinierte Reihe von Carex Elata und Carex Rostrata in die Anlage integriert. Bei der Carex Elata handelt es sich um eine gut sauerstoffeintragende Carexart (3,64 bis 3,71 mg/l) die mit einer wenig Sauerstoffeintragenden Carex Rostrata (3,19 bis 2,57 mg/l) kombiniert werden kann. Die Kombination der Pflanzen reicht aus, um einen Sauerstoffsättigungsgehalt von 30 bis 50 % in der Anlage aufrechtzuerhalten. Die Carex Elata ist weiterhin in der Lage, massive Störfalle zu überleben und auch Abbauleistungen zu zeigen.

Bei Verwendung von permeathaltigem Abwasser ist zwar bekannt, dass die Carex Elata nicht mehr in der Lage ist, die anfallenden Kohlenstoffverbindungen abzubauen, jedoch überführt sie diese in leicht abbaubare Kohlenstoffverbindungen, so dass diese von nachfolgenden Pflanzenreihen bzw. noch innerhalb einer Pflanzenreihe abgebaut werden können. Aufgrund dieser Eigenschaft, schwerabbaubare Kohlenwasserstoffverbindungen zu überführen, wird die Carex Elata im dritten Becken untergebracht.

Untersuchungen haben ergeben, dass die Kombinationsreihe einen Wirkungsgrad von 12,3 % (tagsüber) in der CSB-Reduzierung und einen Wirkungsgrad von 8,2 % bei H18 aufweist. Somit kann zum Reinigen des Abwasser mit ca. 15 mg/l CSB, ca. 0,4 mg/l H18 Schmutzfracht problemlos gereinigt werden. Die Kombinationsreihe eignet sich jedoch nicht im Nachtbetrieb. Weiterhin ist im Tagbetrieb noch eine kontinuierliche Phosphatelimination von 4,3 % zu beobachten. Im Nachtbetrieb ist ein um 1,6 % verringerter Wirkungsgrad zu beobachten.

Die vierte Pflanzenreihe ist mit Carex Acutiformis und Iris Pseudacorus bestückt, und zwar beträgt der Pflanzenanteil im Wesentlichen das Verhältnis
Iris Pseudacorus : Carex Acutiformis = 1 : 4.

Bei dieser Kombinationsreihe wird eine sehr gute sauerstoffeintragende Pflanze, die Iris Pseudacorus ( 4,88 mg/l bis 6,06 mg/l), mit einer sehr schlecht sauerstoffeintragenden Pflanze, die Carex Acutiformis ( 3,03 bis 2,52 mg/l), kombiniert.

Vor allem im Winterbetrieb zeigt diese Kombinationsreihe keine Leistung im Bezug auf Verringerung des CSB- bzw. H18-Gehaltes im Abwasser. Somit sollte in einer neuen bzw. verbesserten Anlage nur noch die Iris Pseudacorus verwendet werden, da sie aufgrund gesammelter Daten gute Werte zeigt.

In den beiden weiteren Pflanzenreihen wird jeweils die Juncus Inflexus und die Simse (Scirpus Lacustris) verwendet. Die Simse soll laut Literatur gute Eigenschaften im Bereich der Phosphatelimination aufweisen. Die Juncus Inflexus als sehr guter Sauerstoffeintrager (5,6 bis 6,4 mg/l) weist hervorragende Abbauleistungen im Bereich von Kohlenwasserstoffverbindungen auf. Eine Phosphatelimination ist schon bei Jungpflanzen zu beobachten.

Eine Phospatelimination kann vor allem der Carex Elata und Juncus Inflexus und der Scirpus Lacustris zugeordnet werden. Im Nachtbetrieb ist ein Anstieg der Phosphatelimination zu beobachten. Somit könnte phosphathaltiges Abwasser tagsüber oder abends in ein entsprechendes Pflanzenbecken eingebracht werden und über Nacht dort belassen werden, da der Phosphatabbau nachts höher ist als tagsüber. Der Wirkungsgrad im Bereich der Phosphatelimination beträgt 1,1 % tagsüber und 5,9 % nachts.

Weiterhin sind die beiden Pflanzenreihen in den Becken 6 und 7 in der Lage, tagsüber den CSB-Gehalt des Abwasserstroms zu reduzieren.

Somit hat sich neben der Carex Riparia die Carex Elata als weitere bevorzugte Pflanze herausgestellt, die in jeder Anlage verwendet werden sollte.

Zum Reinigen von sanitärem und industriellem Abwasser ist in einer weiter bevorzugten Ausführungsform einer erfindungsgemäßen Pflanzenkläranlage die Reihenfolge von Pflanzen unterschiedlicher Pflanzensorten die folgende: (a) Phragmitis Australis, (b) Juncus Inflexus, (c) Carex Riparia, (d) Carex Elata, (e) Carex Rostrata, (f) Iris Pseudacorus, (g) Scirpus Lacustris, (h) F2 und gegebenenfalls (i) Scirpus Lacustris. Die Pflanzen der Pflanzensorten (d) Carex Elata und (e) Carex Rostrata könnten miteinander gemischt angeordnet sein.

Wie bereits oben angedeutet, sind bevorzugt Pflanzen lediglich einer Pflanzensorte in einem Pflanzenbecken angeordnet. Es kann auch zweckdienlich sein, Pflanzen mindestens zwei unterschiedlicher Pflanzensorten in einem Pflanzenbecken miteinander gemischt anzuordnen. Durch die Anordnung unterschiedlicher Pflanzensorten getrennt in jeweils einem Pflanzenbecken kann insbesondere ein Vermischen der Pflanzen der unterschiedlichen Pflanzensorten miteinander (Wildwuchs) im Lauf der Zeit verhindert werden, so dass die Prozesssicherheit der Pflanzenkläranlage bezüglich der Klärung des Abwassers auch auf Dauer gewährleistet ist.

Bereits oben sind unterschiedliche Ausführungsformen von erfindungsgemäßen Pflanzenkläranlagen beschrieben worden, bei denen mindestens sechs Pflanzenbecken vorgesehen sind, welche jeweils Pflanzen mindestens einer Pflanzensorte aufweisen. Vorzugsweise handelt es sich bei den in einem Pflanzenbecken angeordneten Pflanzen um Pflanzen jeweils einer Pflanzensorte. Mit anderen Worten unterscheiden sich die in den einzelnen Pflanzenbecken angeordneten Pflanzen hinsichtlich der Pflanzensorte.

Eine ganz besonders flexibel einsetzbare Pflanzenkläranlage kann dann realisiert werden, wenn die Fließrichtung des zu reinigenden Abwassers in Bezug auf die Reihenfolge von Pflanzen unterschiedlicher Pflanzensorten variierbar ist. Dies könnte beispielsweise dadurch erfolgen, dass das zu reinigende Abwasser nach Durchlaufen eines Pflanzenbeckens anstatt es in das - bezüglich der räumlichen Anordnung - nächste, der vorgebbaren Reihenfolge entsprechende Pflanzenbecken zuzuleiten, es einem anderen Pflanzenbecken zugeleitet wird. Dies könnte beispielsweise mit Hilfe von Verbindungsleitungen oder einem Rohrsystem erfolgen, mit welchem - beispielsweise durch eine Pumpe gefördert - zu reinigendes Abwasser, das ein Pflanzenbecken durchlaufen hat, in ein anderes Pflanzenbecken gefördert wird, welches nicht unmittelbar zu dem vorherigen Pflanzenbecken benachbart angeordnet ist. Zur konkreten Realisierung eines solchen Fördersystems für das zu reinigende Abwasser könnte eine Steuer- bzw. Regelvorrichtung, beispielsweise in Form eines Computers, vorgesehen sein, mit welcher Pumpen, Ventile und/oder Schleusen betätigbar sind.

In einer ganz besonders bevorzugten Ausführungsform ist in mindestens einem Pflanzenbehälter und/oder in einem weiteren Behälter der Pflanzenkläranlage mindestens ein Mittel vorgesehen, mit welchem der Grad des zu reinigenden Wassers zumindest hinsichtlich eines vorgebbaren Parameters optimierbar ist. Ein vorgebbarer Parameter könnte hierbei beispielsweise eine auf eine Volumeneinheit des zu reinigenden Abwassers bezogene Mengenangabe eines bestimmten Schadstoffs, eines chemischen Elements, einer chemischen Verbindung, Keime, Bakterien und/oder Krankheitserreger sein. Bei diesem Parameter könnte es sich allerdings auch um eine Eigenschaft des gereinigten Abwassers handeln, beispielsweise die Eigenschaft, dass das gereinigte Wasser Trinkwasserqualität aufweist. Hiermit ist letztendlich implizit eine Mengenangabe bestimmter Zusätze im Wasser verbunden, die einen oberen tolerierbaren Grenzwert definieren.

Das Mittel könnte - vorzugsweise lebende - Filter oder Filterbereiche aufweisen, deren Filterwirkung auf den Einsatz von Pflanzen und/oder Einzellern und/oder Mehrzellern und/oder Bakterien basiert.

So könnte beispielsweise mindestens ein Algenball - insbesondere mit der Bezeichnung Cladophora Aegagropila - vorgesehen sein. Der oder die Algenbälle könnten in einem Pflanzenbecken und/oder in einem weiteren Becken der Pflanzenkläranlage angeordnet sein. Der Algenball zählt zu den Süßwasseralgen. Er hat die Eigenschaft, dass er Nitrit und Nitrat aus dem Wasser abbauen kann und pathogene Keime im Wasser reduzieren kann. Somit kann zum Reinigen von sanitärem Abwasser zumindest ein Algenball in einem Becken bzw. Pflanzenbecken der Pflanzenkläranlage angeordnet werden.

Alternativ oder zusätzlich könnte mindestens ein Farngewächs und/oder mindestens ein Naturschwamm vorgesehen sein. Zumindest eine Pflanze eines Farngewächses und/oder ein Naturschwamm könnte in einem Pflanzenbecken der Pflanzenkläranlage angeordnet werden. Farngewächse können toxische Stoffe aus dem Wasser entfernen, z.B. im Wasser vorhandenes Arsen.

Bevorzugt weisen die Mittel Mikroben und/oder Cyano-Bakterien auf, die an Pflanzen der Pflanzenkläranlage, insbesondere an deren Wurzelbereich, kultiviert bzw. anordenbar sein könnten. Die Mikroben, also ebenfalls Bakterien, sind in der Lage, N₂ (Stickstoff) aus der Luft in Amoniak (NH₃) umwandeln. Amoniak ist Voraussetzung für ein Pflanzenwachstum, welches insbesondere bei Pflanzenkläranlagen in großen Höhenlagen (z.B. > 2000 m über dem Meeresspiegel) wünschenswert ist. Die Mikroben könnten an den Wurzeln der Pflanzen oder an speziell vorgesehenen Substraten (z.B. Lavastein) angesiedelt werden, die in einem Pflanzenbehälter oder in mindestens einem Becken ortsfest angeordnet sein könnten. Alternativ oder zusätzlich kann Kohlendioxid (CO₂ durch das zu reinigende Abwasser geblasen werden. Das Kohlendioxid könnte beispielsweise in Umgebungsluft gelöst sein oder aus chemischen Reaktionen stammen, welche in der Halle bzw. in dem Gebäude (z.B. vom Schornstein) ablaufen. Durch das Einbringen von Kohlendioxid werden die Pflanzen zum Wachstum angeregt. Mit Cyano-Bakterien kann mit dem Prozess der Fotosynthese reiner Sauerstoff (O₂) erzeugt werden. Mit dem reinen Sauerstoff können die im Wasser vorhandenen Schadstoffe eine Verbindung eingehen, so dass hierdurch die Pflanzen die Möglichkeit haben, die Schadstoffe aufzunehmen bzw. abzubauen. Dies ist insbesondere für kolloidal vorliegende Schadstoffe zum Anlagern - z.B. an den Pflanzenwurzeln - vorteilhaft.

Alternativ oder zusätzlich könnte das Mittel künstlich hergestellte Filter aufweisen.

Besonders bevorzugt ist mindestens ein Filter in einem Pflanzenbehälter und/oder in einem weiteren Behälter vorgesehen, der Lehm und/oder Teeblätter und/oder Kaffeesatz und/oder Reishülsen aufweist. Der Filter könnte wie folgt beschrieben hergestellt werden:
- trockener, zerstoßener Lehm wird mit organischen Materialien wie Teeblättern, Kaffeesatz und/oder Reishülsen und etwas Wasser zu einer festen Masse vermischt,
- aus dieser Masse wird ein im Wesentlichen zylindrischer Topf geformt, der an einem Ende geschlossen sein kann,
- diese Form wird - beispielsweise in der Sonne - getrocknet und dann - beispielsweise in einem Ofen bei einer vorgabbaren Temperatur gebrannt - ausgehärtet,
- der Filter wird mit Stroh umgeben und auf einen Haufen Kuhdung platziert.

Nach einer Stunde ist der Filter gebrauchsfertig. Der Filter kann 96,4 bis 99,8 % der Coli-Bakterien entfernen. Die Konzentration der danach noch nachweisbaren Keime bewegt sich damit deutlich in einem für Menschen ungefährlichen Bereich. Es ist denkbar, dass der Filter in der Pflanzenkläranlage derart angeordnet ist, dass das gesamte zu reinigende Wasser durch den Filter hindurchtreten oder daran vorbeifließen muss.

Weiterhin könnte ein Filter zum Einsatz kommen, der - vorzugsweise zerkleinerte - Samen einer Frucht eines Baumes, insbesondere des Baumes Moringa Oleifera, aufweist. Ein solcher Filter könnte beispielsweise in Form von Presslingen ausgebildet sein, welche z.B. die Größe eines Eishockeypucks aufweisen und in einem Pflanzenbecken und/oder einem weiteren Becken eingegeben sein könnten. Gegebenenfalls kann es vorkommen, dass ein solcher Pressling sich im Lauf der Zeit auflöst und Verbindungen mit Schadstoffen eingeht und/oder Bakterien abtötet. Daher wäre sicherzustellen, dass rechtzeitig weitere Presslinge der Pflanzenkläranlage zugeführt werden. Der Moringa Baum ist in Afrika, Madagaskar, Arabien und Indien angesiedelt. Er ist ein Laubbaum und wird bis zu 3 m hoch. Die Früchte des Baumes sind Hülsenfrüchte grüner Farbe, in denen sich die Samen befinden. Diese Samen haben die Eigenschaft, dass sie trübes Wasser reinigen können. Ein Baum liefert ca. 5000 Samen pro Jahr. 1 Samenkorn mit 100 mg/l reicht aus, um 99 % der Bakterien darin zu töten. Das bedeutet, wenn in 1 Liter ungefähr 400 bis 700 mg (1,5 Samen) verrührt werden, so sind keine Keime mehr nachzuweisen. Zerkleinerte Samen haben ein Protein, welches eine positive Ladung produziert und negativ geladene Partikel bindet, wie z.B. Lehm, Bakterien und andere toxische Partikel im Abwasser. Der Ausflockungsprozess entsteht, wenn die Proteine negativ geladene Teilchen binden und durch die Aggregation der Partikel im Abwasser Flocken entstehen. Die Flocken können beispielsweise durch Absetzen oder Filtration entfernt werden. Denkbar ist, dass die Samen in einem Filter in der Pflanzenkläranlage derart angeordnet sind, dass das gesamte zu reinigende Wasser durch den Filter hindurchtreten muss.

In einer bevorzugten Ausführungsform ist mindestens ein Filter am Boden eines Pflanzenbehälters und/oder eines Pflanzenbeckens und/oder eines weiteren Beckens vorgesehen. Das Filtermaterial eines solchen Filters könnte beispielsweise gemahlen Samen der Frucht des Baumes Moringa Oleifera aufweisen. Das Filtermaterial könnte zwischen dem Boden des Behälters bzw. Beckens und einer Filtermatte angeordnet sein. Die Filtermatte ist für das zu reinigende Abwasser zumindest teildurchlässig - im Sinn einer Filtermembran - ausgebildet, so dass eine Wechselwirkung zwischen dem Filtermaterial und dem zu reinigenden Abwasser möglich ist, was letztendlich eine Reinigung des Abwassers bewirkt.

Ganz besonders bevorzugt ist mindestens ein Strömungsleitmittel vorgesehen, mit welchem ein Durchfließen des zu reinigenden Abwassers in horizontaler und/oder vertikaler Richtung durch einen Pflanzenbehälter und/oder Becken und/oder Pflanzenbecken bewirkt werden kann. So könnte beispielsweise ein Strömungsleitmittel mindestens zwei nebeneinander und/oder hintereinander - vorzugsweise schräg - angeordnete Platten aufweisen. Die Platten ermöglichen insbesondere zumindest weitgehend eine Reinigung des Abwassers im Sinn eines Schrägklärprinzips, indem beispielsweise das zu reinigende Wasser in Richtung eines am Boden des Beckens angeordneten Filters leitbar ist. Mindestens eine Platte könnte für zu reinigendes Abwasser zumindest teilweise durchlässig ausgebildet sein, so dass ein Teil des zu reinigenden Abwassers auch durch die Platte hindurchtreten kann, ohne von der Platte in der hierdurch beabsichtigten Strömungsrichtung umgeleitet zu werden. Der Grad der Durchlässigkeit der Platte ist ein Parameter, der speziell auf die konkret vorliegende Filteranordnung oder den zu erzielenden Zweck abgestimmt werden kann.

Weiterhin könnte ein Strömungsleitmittel mindestens zwei nebeneinander und/oder hintereinander - vorzugsweise im Wesentlichen vertikal, insbesondere jeweils im Sinn eines Wehrs - angeordnete Platten aufweisen, welche alternierend sich von oben unter die Wasseroberfläche und vom Boden des Beckens sich nach oben in Richtung der Wasseroberfläche und gegebenenfalls sich bis über die Wasseroberfläche hinaus erstreckend angeordnet sein könnten. Hierdurch ist das zu reinigende Abwasser alternierend in horizontaler und vertikaler Richtung durch das Becken leitbar. Strömungsleitmittel dieser Art könnten insbesondere dann eingesetzt werden, wenn Filtermaterial gelöst in einem Becken mit zu reinigendem Abwasser vorgesehen ist, welches nahe der Wasseroberfläche im Abwasser schwimmt, so dass das zu reinigende Abwasser beim Durchfließen und Umströmen an diesen Strömungsleitmitteln mindestens einmal durch eine Schicht mit schwimmendem Filtermaterial geleitet wird.

Insbesondere wenn das zu reinigende Abwasser am Ende des Klärungsprozesses Trinkwasserqualität aufweisen soll, ist vorgesehen, das zu reinigende Abwasser für eine vorgebbare Zeitdauer mit mindestens einem Heizmittel erhitzt wird. Im Allgemeinen sollte es ausreichend sein, das zu reinigende Wasser für eine Zeitdauer von mindestens einer Stunde auf mindestens 50 bis 60 Grad Celsius zu erhitzen. Hierdurch können insbesondere Krankheitserreger zerstört werden.

Das Heizmittel könnte mindestens einen Durchlauferhitzer aufweisen, durch welchen das zu reinigende Abwasser leitbar ist. Unter einem Durchlauferhitzer im vorliegenden Sinn ist insbesondere eine Vorrichtung zu verstehen, durch welche das zu reinigende Abwasser oder ein Wärmetauschmedium geleitet wird und mit welcher das zu reinigende Abwasser oder das Wärmetauschmedium unmittelbar erwärmt wird, beispielsweise durch eine Gasflamme einer Gasverbrennung oder aber durch Wärmeaustausch mit einem wärmeren Medium. Die Fließmenge und/oder die Fließgeschwindigkeit des zu reinigenden Abwassers sollte hierbei vorgebbar und/oder regel- bzw. steuerbar sein, um nämlich das zu reinigende Wasser für eine vorgebbare Mindestdauer auf eine vorgebbare minimale Temperatur zu erhitzen.

Im Konkreten könnte das Heizmittel mindestens einen Wärmekreislauf oder eine Wärmepumpe aufweisen. Ein solcher Wärmekreislauf sollte zumindest Verbindungsleitungen, mindestens einen Durchlauferhitzer, mindestens einen in einem Pflanzenbecken oder weiteren Becken angeordneten Wärmetauscher und ein Wärmetauschmedium aufweisen. Das Wärmetauschmedium wird in dem Durchlauferhitzer aufgeheizt und über die Verbindungsleitungen zum Wärmetauscher geleitet, um das zu reinigende Abwasser zu erhitzen. Das Wärmetauschmedium könnte eine Flüssigkeit oder ein Gas aufweisen und mit einer Pumpe durch den Wärmekreislauf zirkuliert werden.

In einer ganz besonders bevorzugten Ausführungsform weist der Durchlauferhitzer einen Solarkollektor auf und/oder ist einer in dem Gebäude angeordneten Maschine zugeordnet, welche beim Betrieb Wärmeenergie an das durch den Durchlauferhitzer zirkulierende Wärmetauschmedium abgibt. Durch diese Maßnahme kann ein Erhitzen des zu reinigenden Abwassers in ganz besonders vorteilhafter Weise kostengünstig realisiert werden, da in einem solchen Fall zum Erhitzen des Abwassers kein elektrischer Strom von einem Stromnetz bezogen, Gas oder Öl verbrannt werden muss. Ein Durchlauferhitzer wird insbesondere dann in Form eines Solarkollektors ausgebildet sein, wenn die erfindungsgemäße Pflanzenkläranlage in einem Gebiet mit viel Sonnenlicht betrieben wird. Zum Optimieren des Wirkungsgrads eines Solarkollektors könnte mindestens eine Einrichtung zur optischen Konzentration von Sonnenlicht vorgesehen sein, beispielsweise mit Spiegeln oder Linsen, insbesondere Fresnellinsen.

Es ist auch denkbar, das zu reinigende Abwasser nach dem Tauchsiederprinzip zu erhitzten, wobei der elektrische Strom zum Erhitzen eines elektrischen Wärmewiderstands mit Hilfe einer Photovoltaikanlage, vorzugsweise mit Solarzellen oder Photoelementen, erzeugt werden könnte. Auch den Solarzellen oder den Photoelementen könnte mindestens eine Einrichtung zur optischen Konzentration von Sonnenlicht zugeordnet sein. Ebenfalls zur Erhöhung des Wirkungsgrads der Wärme- bzw. Stromerzeugung könnte ein Solarkollektor und/oder ein Teil der Photovoltaikanlage derart angeordnet sein, dass er auf den aktuellen Sonderstand ausgerichtet wird.

Der mit der Photovoltaikanlage erzeugte elektrischen Strom könnte auch zum Betreiben weiterer Komponenten der Pflanzenkläranlage genutzt werden. Als mögliche Verbraucher kommen beispielsweise elektrisch betriebene Wasserpumpen in Frage. Vorzugsweise wird der mit der Photovoltaikanlage erzeugte elektrische Strom in mindestens einem Akkumulator gespeichert, so dass auch nachts oder bei ungünstigen Wetterverhältnissen eine elektrische Versorgung der entsprechenden Komponenten der Pflanzenkläranlage sichergestellt ist.

Das zu reinigende Abwasser könnte in einem Becken order Pufferbecken erhitzt werden, welches in Fließrichtung des zu reinigenden Abwassers am Anfang und/oder am Ende der Pflanzenkläranlage vorgesehen sein kann. Somit werden nicht alle in den Pflanzenbecken angeordnete Pflanzen unmittelbar mit dem erhitzten Wasser beaufschlagt.

Weiterhin könnte vorgesehen sein, am Ende des Erhitzungsschritts die dem zu reinigenden Abwasser zugeführte Wärmeenergie zumindest teilweise zur Heizung des Gebäudes zu nutzen, beispielsweise mit Hilfe einer hierfür vorgesehenen Wärmepumpe. Hierdurch könnte beispielsweise der Aufheizvorgang des zu reinigenden Abwassers in das Gesamtkonzept der Klimatisierung des Gebäudes und des Energiehaushalts einbezogen werden, auf welchem sich die erfindungsgemäße Pflanzenkläranlage befindet.

In einer weiteren Ausführungsform wird das zu reinigende Abwasser zumindest teilweise elektrolytisch gereinigt. Hierzu könnten beispielsweise blanke elektrische Leitungen in einem Pflanzenbehälter oder weiteren Behälter vorgesehen sein, durch welche elektrischer Strom leitbar ist. Dieser Strom könnte über das zu reinigende Abwasser auf eine entsprechend am Pflanzenbecken oder Pflanzenbehälter vorgesehene Polfläche abfließen. Üblicherweise weist das zu reinigende Abwasser genügend Salze, Schwermetalle, Mineralanteile oder Ionen auf, so dass die elektrische Leitfähigkeit des zu reinigenden Abwassers gewährleistet ist. Es könnte sowohl Gleichstrom als auch Wechselstrom zum Einsatz kommen. Bevorzugt wird eine hohe Spannung, beispielsweise 10000 bis 20000 V, einer geringen Stromstärke verwendet.

Krankheitserreger in dem zu reinigenden Abwasser könnten zumindest teilweise auch durch Beaufschlagen mit hochenergetischer Strahlung abgetötet werden. Dies kann z.B. mit Licht des ultravioletten Wellenlängenspektrums erfolgen. Als Lichtquelle könnte beispielsweise ultraviolettes Licht der Sonne genutzt werden und/oder mindestens eine UV-Lampe dienen, die ultraviolettes Licht erzeugt. Vorzugsweise wird das zu reinigende Abwasser durch ein Becken geringer Wassertiefe und einer relativ großen Wasseroberfläche geleitet, da hochenergetische Strahlung keine große Eindringtiefe in Wasser aufweist und das zu reinigende Abwasser zumindest größtenteils von der hochenergetischen Strahlung durchsetzt werden soll.

Weiterhin könnte zum Filtern des zu reinigenden Abwassers mindestens ein Papierfilter vorgesehen sein, welcher zerkleinertes oder recyceltes Altpapier bzw. Papier aufweisen könnte. Auch ist denkbar, einen Filter oder einen Filterbereich mit kleingehäckseltem Grünschnitt - z.B. von Gras - vorzusehen, mit welchem das zu reinigende Abwasser zumindest teilweise reinigbar ist.

Abgesehen von einem Filtermittel, wie z.B. kleingehäckseltem Grünschnitt, das in einem bestimmten Bereich in dem zu reinigenden Wasser gelöst eingegeben sein könnte, werden die Mittel zum Optimieren des Reinigungsgrads des zu reinigenden Wassers zumindest hinsichtlich eines vorgebbaren Parameters an einem vorgebbaren Ort bzw. ortsfest in der Pflanzenkläranlage angeordnet.

In einer ganz besonders bevorzugten Ausführungsform ist die Verweildauer des zu reinigenden Abwassers in einem Pflanzenbehälter und/oder in einem weiteren Behälter und/oder in einem Pflanzenbecken derart vorgebbar, dass eine nahezu optimale Klärwirkung erzielbar ist. Dies könnte durch eine - z.B. in Form eines Computers ausgebildete - zentrale Steuer- bzw. Regeleinrichtung der erfindungsgemäßen Pflanzenkläranlage erreicht werden, die einzelne Pumpen, Ventile und/oder Schleusen entsprechend ansteuert, so dass das zu reinigende Abwasser beispielsweise in einem Pflanzenbecken mit Pflanzen der Pflanzensorte Carex Riparia mindestens 3 h verweilt bzw. durch dieses Pflanzenbecken über eine Zeitdauer von 3 h geleitet wird.

In einer ganz besonders bevorzugten Ausführungsform der vorliegenden Erfindung ist eine Vorrichtung zum Einbringen von Sauerstoff in das zu reinigende Abwasser vorgesehen. Die Vorrichtung weist eine Abwasserzuführung auf, die im einfachsten Fall durch ein Rohr realisiert sein könnte. Das von der Abwasserzuführung zugeführte Abwasser fällt im freien Fall auf ein Prallgitter, wodurch das Abwasser in Tropfen zerspringen kann. Unter einem Prallgitter kann man sich mehrere quer oder schräg zur Fallrichtung angeordnete Rippen oder Lamellen vorstellen, die in Form von Metallstreifen und ähnlich wie ein Waschbrett ausgebildet sein könnten. Letztendlich kann unter einem Prallgitter alles verstanden werden, was eine Tropfenbildung des auf das Prallgitter fallenden Abwassers ermöglicht. Die Vorrichtung könnte ein Gehäuse aufweisen, welches zumindest größtenteils das Prallgitter umgibt. Das Gehäuse könnte eine Öffnung oder einen offenen Bereich aufweisen, über welche bzw. welchen Umgebungsluft zum Prallgitter gelangen kann, so dass Sauerstoff von der Umgebungsluft in das zu reinigende Abwasser eingetragen werden kann. Das die Vorrichtung durchlaufene Abwasser kann dann mit einem erhöhten Sauerstoffanteil in der Pflanzenkläranlage weiterverarbeitet werden.

Hinsichtlich eines Verfahrens zum Reinigen von Abwasser wird die eingangs genannte Aufgabe durch die Merkmale des Patentanspruchs 45 gelöst. Hiernach betrifft das erfindungsgemäße Verfahren ein Verfahren zum Reinigen von Abwasser mit einer Pflanzenkläranlage. Die Pflanzenkläranlage umfasst einen Pflanzenbehälter, eine Zuführeinheit, eine Abführeinheit und Pflanzen. Mit der Zuführeinheit wird zu reinigendes Abwasser der Pflanzenkläranlage zugeführt. Mit der Abführeinheit wird gereinigtes Abwasser von der Pflanzenkläranlage abgeführt. Die Pflanzen sind in dem Pflanzenbehälter angeordnet und derart ausgebildet, dass sie in dem Pflanzenbehälter ohne Substrat angeordnet sind. Ein Pflanzenbehälter weist vorzugsweise mindestens zwei Pflanzenbecken auf. Mindestens ein weiterer Behälter kann vorgesehen sein. Zumindest ein Teil des Pflanzenbehälters ist auf einem Gebäudedach angeordnet. In dem Pflanzenbehälter sind Pflanzen mindestens zwei unterschiedlicher Pflanzensorten vorgesehen. In Abhängigkeit der Art des Abwassers - beispielsweise industrielles und/oder sanitäres Abwasser - wird das zu reinigende Abwasser in einer vorgebbaren Reihenfolge von Pflanzen unterschiedlicher Pflanzensorten gereinigt. Die Pflanzen befinden sich auf dem Boden des Pflanzenbehälters oder stehen auf einer Teichfolie, falls der Pflanzenbehälter mit Teichfolie versehen ist.

Das erfindungsgemäße Verfahren zum Reinigen von Abwasser kann insbesondere mit einer Pflanzenkläranlage nach einem der Ansprüche 1 bis 44 ausgeführt werden, so dass zur Vermeidung von Wiederholungen auf den vorangegangenen Teil der Beschreibung verwiesen wird.

Weiterhin sei ausdrücklich darauf hingewiesen, dass die erfindungsgemäße Pflanzenkläranlage auch nachts arbeitet, also eine Nachtaktivität der Pflanzen ohne Licht vorliegt. Weiterhin vorteilhaft ist eine Pflanzenkläranlage auf dem Dach im Fall eines Feuers, da dann das dort befindliche Wasser zum Brandschutz dienen kann. Mit der erfindungsgemäßen Pflanzenkläranlage kann das Abwasser um ca. 50 Prozent reduziert werden, was in erster Linie durch eine Wasserverdampfung bzw. Wasserverdunstung in der Pflanzenkläranlage bewirkt wird. Mit einer erfindungsgemäßen Pflanzenkläranlage wird in ganz besonders vorteilhafter Weise Sauerstoff produziert. Insoweit kann diese Tatsache zum Emissionshandel genutzt werden, da ein Industriebetrieb mit einer erfindungsgemäßen Pflanzenkläranlage hierdurch mehr CO2 emittieren kann, da die Pflanzenkläranlage Sauerstoff produziert und der höheren CO2-Emission gegengerechnet werden kann. Natürlich dient die erfindungsgemäße Pflanzenkläranlage in erster Linie zum Reinigen bzw. Reduzieren von Abwasser, so dass dies eine Möglichkeit zur Erfüllung der Auflagen darstellt, welche in dem Bundesemmisionsschutzgesetz vorgeschrieben sind. Gerade im Hinblick auf die Flugstaubproblematik können auf Dächern angeordnete Pflanzenkläranlagen einen Lösungsansatz darstellen, da der Flugstaub sich dort auf der Wasseroberfläche absetzen kann und somit dauerhaft gebunden ist und ebenfalls durch die Pflanzenkläranlage gereinigt bzw. abgebaut werden kann.

In ganz besonders vorteilhafter Weise kann durch die erfindungsgemäße Pflanzenkläranlage eine Kostenreduzierung des anfallenden Industrie- und/oder Sanitärabwassers erfolgen, da hohe Kosten für eine industrielle (Sonder-)Entsorgung des Abwassers eingespart werden können. Eine erfindungsgemäße Pflanzenkläranlage kann derart ausgestaltet werden, dass sie in der Lage ist, das zu reinigende Abwasser in Trinkwasserqualität abzugeben. Das könnte insbesondere in Regionen ganz besonders vorteilhaft eingesetzt werden, in welchen Trinkwasser Mangelware ist oder in welchen eine Trinkwasserversorgung nicht unmittelbar über Rohrleitungen erfolgt (z.B. weit abgelegene Bauernhöfe). Aber auch in Ballungsgebieten, in welchen dies nicht der Fall ist, kann dies die Kosten für die Trinkwasserversorgung ganz erheblich reduzieren. Auch das Flächenutzungsproblem zur Schaffung von Naturflächen (Grünflächen) kann hierdurch gelöst werden.

Üblicherweise arbeiten die Pflanzen einer Pflanzenkläranlage mindestens 20 Jahre, so dass nach einer anfänglichen Investition - insbesondere bezüglich der Anschaffung der Pflanzen - sich eine solche Anlage sehr schnell amortisiert. In der Regel fallen auch keine Dachreparaturen an, da das Dach den Witterungsbedingungen, beispielsweise Sonne, Hagel oder Schnee, aufgrund der Pflanzenkläranlage nicht ausgesetzt ist. Die Tatsache, dass Grünpflanzen auf den Dächern der Gebäude angeordnet sind, vermittelt den Menschen, und insbesondere den Mitarbeitern eines Industriebetriebs, eine positive Umgebung und hiermit verbunden eine Wohlfühlgarantie.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen jeweils in einer schematischen Darstellung
- Fig. 1: eine Draufsicht eines ersten erfindungsgemäßen Ausführungsbeispiels einer Pflanzenkläranlage,
- Fig. 2: eine Draufsicht eines zweiten erfindungsgemäßen Ausführungsbeispiels einer Pflanzenkläranlage,
- Fig. 3: eine Draufsicht eines dritten erfindungsgemäßen Ausführungsbeispiels einer Pflanzenkläranlage,
- Fig. 4: eine Draufsicht eines vierten erfindungsgemäßen Ausführungsbeispiels einer Pflanzenkläranlage,
- Fig. 5: eine Seitenansicht eines Teils eines erfindungsgemäßen Ausführungsbeispiels einer Pflanzenkläranlage,
- Fig. 6 bis 9: jeweils eine Seitenansicht eines weiteren Teils eines erfindungsgemäßen Ausführungsbeispiels einer Pflanzenkläranlage und
- Fig. 10: eine Vorrichtung zum Einbringen von Sauerstoff in das zu reinigende Abwasser.

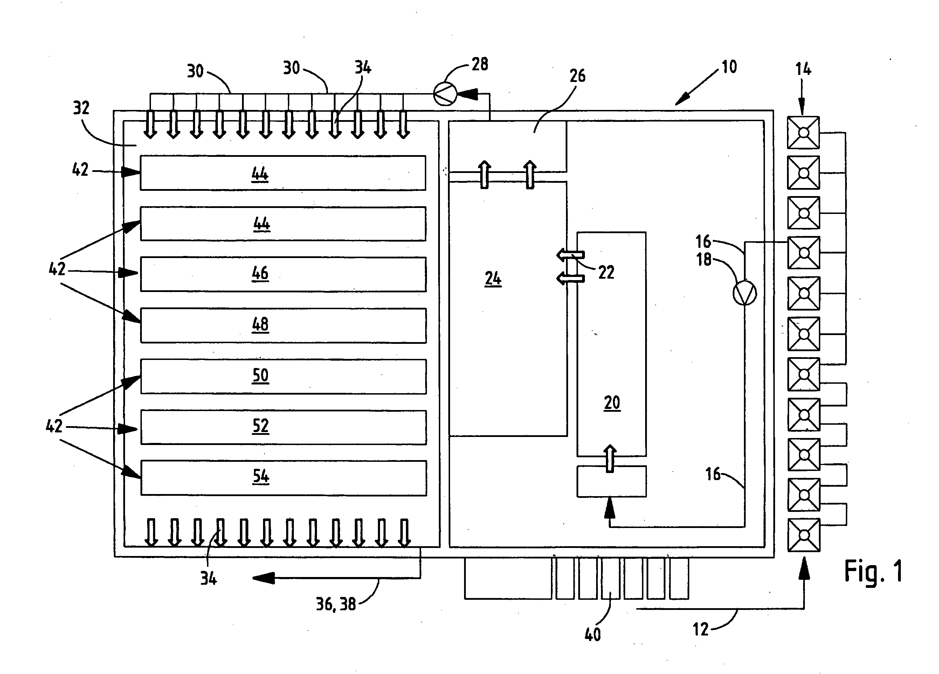

Gleiche oder ähnliche Baugruppen in den Figuren sind mit den gleichen Bezugszeichen gekennzeichnet. Fig. 1 zeigt eine erfindungsgemäße Pflanzenkläranlage 10 in der Draufsicht für ein Flachdach bei einer industriellen Anwendung, d.h. zur Reinigung von industriellem Abwasser. Das zu reinigende Abwasser wird über die lediglich schematisch mit dem Pfeil 12 gekennzeichnete Zuleitung der Pflanzenkläranlage 10 zugeführt. Das zu reinigende Abwasser wird in mehreren ebenerdig angeordneten Dekantern 14 zum Sedimentieren geleitet. Über die Leitung 16, welche der Zuführeinheit der Pflanzenkläranlage 10 zugeordnet ist, wird mit Hilfe der Pumpe 18 das zu reinigende Abwasser in das Vorbecken 20 gepumpt beziehungsweise geleitet.

Über den lediglich schematisch angedeuteten Wasserfall 22 fällt das zu reinigende Abwasser über eine Strecke von einigen cm im freien Fall in den Zwischenspeicher 24. Der Zwischenspeicher 24 ist hierbei optional, er dient zum Ausgleich von Abwasserspitzen, das heißt von beispielsweise unerwartet hohen Wassermengen pro Zeitintervall. Mit anderen Worten handelt es sich bei dem Zwischenspeicher 24 um einen Retentionsbehälter bzw. um einen weiteren Behälter. Von dort aus fließt es in ein Zwischenbecken 26, aus welchem mit Hilfe der Pumpe 28 das zu reinigende Abwasser über die Leitungen 30 dem Pflanzenbehälter 32 zugeführt wird. Das in den Pflanzenbehälter 32 geleitete Abwasser durchfließt in Pfeilrichtung 34 den Pflanzenbehälter 32, und wird über die Leitungen 36 zu den lediglich schematisch angedeuteten Auslauf 38 geleitet. An dieser Stelle sei betont, dass ein Teil des der Pflanzenkläranlage 10 zugeleiteten Abwassers in den Becken 20, 24, 32 auch verdunsten kann. Die auf dem Gebäudedach angeordneten Becken 20, 24, 32 sind über die Treppen 40 zugänglich.

In dem Pflanzenbehälter 32 sind mehrere Bereiche 42 mit Pflanzen vorgesehen. In den Bereichen 42 sind Pflanzen unterschiedlicher Pflanzensorten angeordnet. In den mit dem Bezugszeichen 44 gekennzeichneten ersten zwei Bereichen 42 sind Pflanzen der Pflanzensorte Carex Riparia angeordnet. In dem mit dem Bezugszeichen 46 gekennzeichneten Bereich 42 sind mehrere Reihen von Pflanzen zweier Pflanzensorten angeordnet, nämlich der Sorten Carex Elata und Carex Rostrata. In dem mit dem Bezugszeichen 48 gekennzeichneten Bereich 42 sind Pflanzen der Pflanzensorte Iris Peudacorus vorgesehen. In dem mit dem Bezugszeichen 50 gekennzeichneten Bereich 42 sind Pflanzen der Pflanzensorte Juncus Inflexus angeordnet. In dem mit dem Bezugszeichen 52 gekennzeichneten Bereich 42 sind mehrere Reihen von Pflanzen zweier Pflanzensorten angeordnet, nämlich der Pflanzensorten Scirpus Lacustris und Iris Pseudacorus. Der mit dem Bezugszeichen 54 gekennzeichnete Bereich 42 weist Pflanzen der Pflanzensorte F2 auf und ist nicht zwingend erforderlich. Somit sind die in den Bereichen 44 bis 54 angeordneten Pflanzen allesamt in einem Pflanzenbehälter 32 angeordnet. In diesem Ausführungsbeispiele sind demgemäß zwischen den einzelnen Bereichen 44 bis 54 keine Trennwände vorgesehen oder der Pflanzenbehälter 32 ist nicht in einzelne Pflanzenbehälter unterteilt. Der gesamte Pflanzenbehälter 32 weist auf dem Dach ein leichtes im Gefälle auf, so dass das in den Pflanzenbehälter 32 über die Zuleitungen 30 - über nahezu die gesamte Breite des Pflanzenbehälters 32 - zugeführte Abwasser aufgrund der Schwerkraft in Fließrichtung 34 zum Auslauf 38 fließt. Die Reihenfolge bzw. Abfolge der Pflanzen der unterschiedlichen Pflanzensorten in den Bereichen 44 bis 54 bezogen auf die Fließrichtung 34 ist darauf abgestimmt, eine optimale Reinigung von industriellem Abwasser zu ermöglichen.

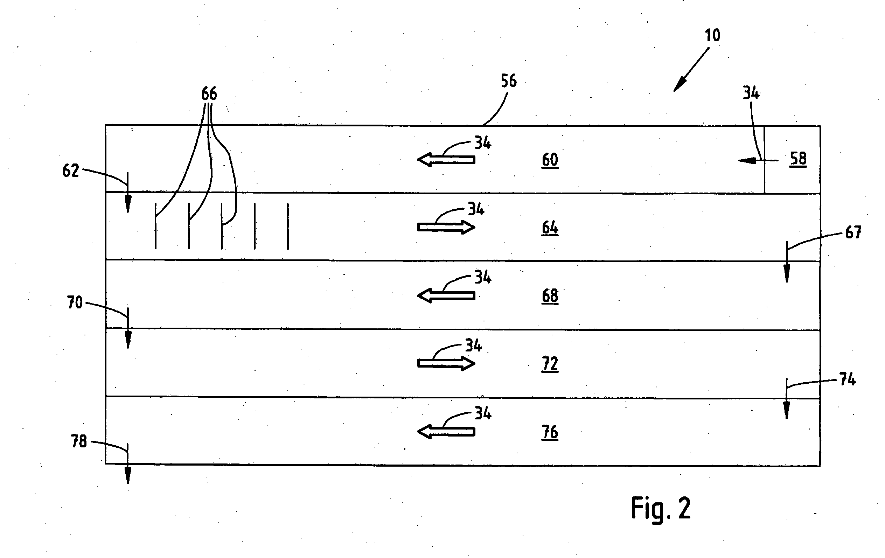

Fig. 2 zeigt in einer schematischen Darstellung eine Draufsicht eines zweiten Ausführungsbeispiels einer erfindungsgemäßen Pflanzenkläranlage 10. Diese Pflanzenkläranlage ist insbesondere zum Reinigen von sanitärem Abwasser ausgelegt. Hier ist der Pflanzenbehälter mit dem Bezugszeichen 56 gekennzeichnet. In dem Pflanzenbehälter 56 sind mehrere Pflanzenbecken vorgesehen, welche mit Pflanzen unterschiedlicher Pflanzensorten bestückt sind. Das zu reinigende Abwasser gelangt über eine in Fig. 2 nicht gezeigte Zuführeinheit zunächst in einen Einfüllbehälter 58. Von dort gelangt das zu reinigende Abwasser in Fließrichtung 34 in das Pflanzenbecken 60, in welchem Pflanzen der Pflanzensorte Juncus Inflexus angeordnet sind. Das zu reinigende Wasser durchläuft das Pflanzenbecken 60 von rechts nach links. Am linken Ende des Pflanzenbeckens 60 ist eine - lediglich schematisch mit einem Pfeil gezeigte - Überleitung 62 vorgesehen, mit welcher das zu reinigende Abwasser in das Pflanzenbecken 64 gelangt. In dem Pflanzenbecken 64 sind Pflanzen der zwei unterschiedlichen Pflanzensorten Carex Acutiformis und Iris Pseudacorus angeordnet. Hierbei sind die Pflanzen in einzelnen Reihen - lediglich schematisch mit dem Bezugszeichen 66 gezeigt - quer zur Fließrichtung 34 abwechselnd hintereinander angeordnet. Die Fließrichtung von dem zu reinigenden Abwasser in dem Pflanzenbecken 64 ist von links nach rechts. Am rechten Ende des Pflanzenbeckens 64 ist eine weitere Überleitung 67, durch welche das zu reinigende Abwasser in das Pflanzenbecken 68, in welchem Pflanzen der Pflanzensorte F2 angeordnet sind, hindurch fließt. Von dem rechten Ende des Pflanzenbeckens 68 fließt das zu reinigende Abwasser zum linken Ende zur Überleitung 70, wo es in das nächste Pflanzenbecken 72 fließt. In dem Pflanzenbecken 72 sind Pflanzen der Pflanzensorte Carex Elata angeordnet. Nach dem Durchfließen des zu reinigenden Abwassers vom linken zum rechten Ende des Pflanzenbeckens 72 gelangt das zu reinigende Abwasser durch die Überleitung 74 in das Pflanzenbecken 76, in welchen Pflanzen der Pflanzensorten Iris Pseudacorus und Scirpus Lacustris in einzelnen Reihen quer zur Fließrichtung 34 abwechselnd hintereinander angeordnet, und zwar vergleichbar zur Anordnung der Pflanzenreihen 66 in dem Pflanzenbecken 64. Nachdem das zu reinigende Abwasser das Pflanzenbecken 76 durchlaufen hat, wird das Abwasser von der lediglich schematisch angedeuteten Abführeinheit 78 von der Pflanzenkläranlage 10 abgeführt.

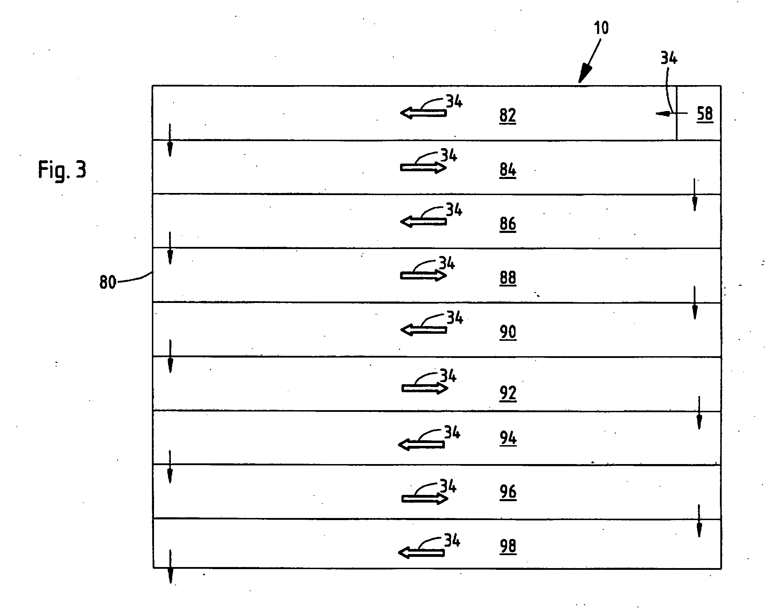

Fig. 3 zeigt in einer schematischen Darstellung ein weiteres Ausführungsbeispiel einer Pflanzenkläranlage 10 in einer Draufsicht, die insbesondere auf die Reinigung von industriellem und sanitärem Abwasser ausgerichtet ist. Auch hier sind wieder mehrere Pflanzenbecken in einem Pflanzenbehälter 80 vorgesehen. Die Fließrichtung des zu reinigenden Wassers ist in dem in Fig. 3 gezeigten Betriebszustand der Pflanzenkläranlage vergleichbar zu der Fließrichtung, wie sie in Fig. 2 gezeigt ist. Mit anderen Worten durchläuft das zu reinigende Abwasser die in Fig. 2 gezeigte Pflanzenkläranlage 10 in horizontaler Richtung schlangenlinien- bzw. mäanderförmig. Das zu reinigende Abwasser gelangt vom Einfüllbehälter 58 in den ersten Pflanzenbehälter 82, der als Vorreinigungsbecken mit Pflanzen der Sorte Phragmitis Australis bestückt ist. Im Pflanzenbecken 84 sind ebenfalls Pflanzen der Sorte Phragmitis Australis vorgesehen. Dieses Pflanzenbecken 84 dient gleichzeitig als Speicherbecken. Die Pflanzenbecken 86 bis 98 sind mit Pflanzen der folgenden Pflanzensorten bestückt:
- Pflanzenbecken 86:: Juncus Inflexus,
- Pflanzenbecken 88:: Carex Riparia,
- Pflanzenbecken 90 und 92:: Carex Elata und Carex Rostrata in einzelnen Reihen quer zur Fließrichtung 34 abwechselnd hintereinander (vergleichbar zu den Reihen 66 im Pflanzenbecken 64) angeordnet,
- Pflanzenbecken 94:: Iris Pseudacorus,
- Pflanzenbecken 96:: Scirpus Lacustris, und
- Pflanzenbecken 98:: Scirpus Lacustris und F2 in einzelnen Reihen quer zur Fließrichtung 34 abwechselnd hintereinander angeordnet.

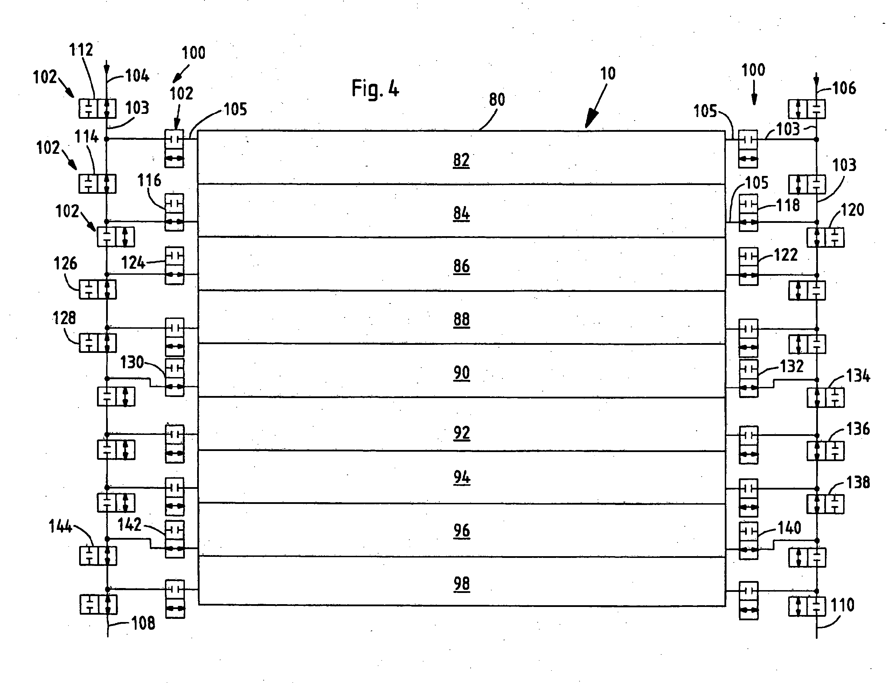

In Fig. 4 ist eine Pflanzenkläranlage 10 gezeigt, die verglichen mit der Pflanzenkläranlage 10 aus Fig. 3 ähnlich ausgebildet ist. Insbesondere ist die Bestückung der einzelnen Pflanzenbecken 82 bis 98 mit Pflanzen bei den Pflanzenkläranlagen 10 der Figuren 3 und 4 im Wesentlichen gleich. Die in Fig. 4 gezeigte Pflanzenkläranlage 10 ist jedoch auch flexibel in dem Sinn betreibbar, dass mit ihr auch Abwasser anderer Art gereinigt werden kann. Dies ist deshalb möglich, da bei dieser Pflanzenkläranlage 10 eine Vorrichtung 100 zum Variieren der Reihenfolge, in welcher das zu reinigende Wasser die einzelnen Pflanzenbecken 82 bis 98 durchläuft, vorgesehen ist. Die Vorrichtung 100 umfasst mehrere 2/2-Wegventile 102, die eine Sperr- und eine Durchlassstellung aufweisen. Zur vereinfachten Darstellung sind lediglich auf der linken Seite der Fig. 4 einige der 2/2-Wegventile 102 mit einem Bezugszeichen versehen. Weiterhin sind Verbindungsleitungen 103 in Form von Rohren vorgesehen, welche die einzelnen 2/2-Wegventile 102 miteinander verbinden. Es sind Verbindungsleitungen 105 vorgesehen, mit welchen 2/2-Wegventile mit den einzelnen Pflanzenbecken 82 bis 98 verbunden sind. In der Vorrichtung 100 könnten nicht gezeigte Pumpen vorgesehen sein, mit welchen das zu reinigende Abwasser von einem Pflanzenbecken in ein anderes Pflanzenbecken gepumpt werden kann.

Bei der in Fig. 4 gezeigten erfindungsgemäßen Pflanzenkläranlage 10 ist es grundsätzlich möglich, dass zu reinigendes Abwasser über die Zuführleitung 104 auf der linken Seite oder über die Zuführleitung 106 auf der rechten Seite der Pflanzenkläranlage 10 zugeführt wird. Dementsprechend ist es ebenfalls möglich, das zumindest teilweise gereinigte Abwasser über die Abführleitung 108 auf der linken Seite oder über die Abführleitung 110 auf der rechten Seite von der Pflanzenkläranlage 10. abzuleiten. Dies hängt letztendlich nur von der jeweiligen Stellung der entsprechenden 2/2-Wegventile 102 ab.

In dem in Fig. 4 gezeigten Betriebszustand sind die Ventilstellungen der 2/2-Wegventile 102 derart gewählt, dass das zu reinigende Abwasser über die Zuführleitung 104 zunächst in das Pflanzenbecken 84 eingeleitet wird. Hierzu sind die 2/2-Wegventile 112, 114 und 116 mit ihrer Durchflussstellung in der aktiven Position eingestellt. Weiterhin sind die 2/2-Wegventile mit dem Bezugszeichen 118 bis 144 allesamt auf Durchfluss eingestellt, so dass das zu reinigende Abwasser nach dem Durchqueren des Pflanzenbeckens 84 als nächstes das Pflanzenbecken 86, dann das Pflanzenbecken 90 und schließlich das Pflanzenbecken 96 durchläuft. In diesem Betriebszustand der Pflanzenkläranlage 10 aus Fig. 4 werden die Pflanzenbecken 82, 88, 92, 94 und 98 nicht mit zu reinigendem Abwasser beaufschlagt bzw. nicht zur Reinigung von diesem Abwasser genutzt. Selbstverständlich ist es möglich, durch entsprechende Betätigung der 2/2-Wegventile 102 eine nahezu beliebige Durchflussreihenfolge des zu reinigenden Abwassers darzustellen, so dass die in Fig. 4 gezeigte Pflanzenkläranlage auf unterschiedliche Arten des zu reinigenden Abwassers flexibel einstellbar ist. Mit der in Fig. 4 gezeigten Konfiguration der Verbindungsleitungen 103, 105 kann keine beliebige Durchflussreihenfolge des zu reinigenden Abwassers durch die Pflanzenbecken 82 bis 98 erzeugt werden. Hierzu könnten allerdings weitere, in Fig. 4 nicht gezeigte zusätzliche Verbindungsleitungen vorgesehen sein, mit welchen beispielsweise eine direkte Verbindungsleitung zwischen dem Pflanzenbecken 92 und dem Pflanzenbecken 84 hergestellt werden kann, über welche das in das Pflanzenbecken 84 geleitete Abwasser unmittelbar zu dem Pflanzenbecken 92 geleitet werden kann, falls nämlich auf Grund der Ventilstellungen der 2/2-Wegventile 102 ein unmittelbares Abfließen aus dem Pflanzenbecken 84 nicht mehr möglich ist.

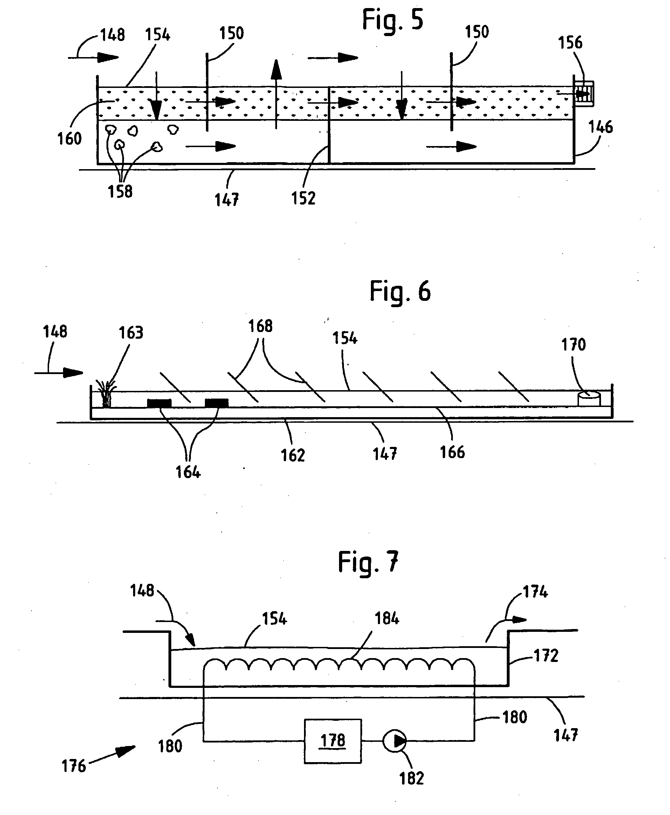

Fig. 5 zeigt in einer Seitenansicht ein Pflanzenbecken 146, welches ein Teil einer erfindungsgemäßen Pflanzenkläranlage darstellt. Das Pflanzenbecken 146 ist auf einem Dach 147 angeordnet, welches jedoch nur schematisch und nur ausschnittsweise eingezeichnet ist. Lediglich schematisch ist angedeutet, dass das zu reinigende Abwasser von links in Richtung des Pfeils 148 in das Pflanzenbecken 146 eingeleitet wird. An dem Pflanzenbecken 146 sind teildurchlässige Platten 150, 152 vorgesehen, die im Wesentlichen in vertikaler Richtung angeordnet sind und sich über die gesamte Breite des Pflanzenbeckens 146 - senkrecht zur Zeichenebene verlaufend - erstrecken. Ein geringer Anteil des zu reinigenden Abwassers kann durch - in Figur 5 nicht gezeigte - Poren in den Platten 150, 152 durchtreten. Die bezüglich des Pfeils 148 erste Platte 150 erstreckt sich von oben bis unter die Wasseroberfläche 154 des im Pflanzenbecken 146 befindlichen zu reinigenden Abwassers. Die Platte 152 erstreckt sich vom Boden des Pflanzenbeckens 146 bis ungefähr zur Wasseroberfläche 154 und ist hier im Sinn eines Wehrs angeordnet. Die zweite Platte 150, die rechts von der ersten bereits erwähnten Platte 150 angeordnet ist, erstreckt sich ebenfalls von oben bis unter die Wasseroberfläche 154. Somit fließt das zu reinigende Abwasser nachdem es in Pfeilrichtung 148 in das Pflanzenbecken 146 eingebracht wird zunächst in horizontaler Richtung, bis es an der ersten Platte 150 angelangt. Von dort aus muss es im Wesentlichen in vertikaler Richtung nach unten fließen, um unter der ersten Platte 150 weiter im Pfeilrichtung 148 zu fließen. Aufgrund der Platte 152 muss das zu reinigende Abwasser in vertikaler Richtung nach oben fließen, um über die Platte 152 in Pfeilrichtung 148 weiter von links nach rechts zu fließen. An der zweiten Platte 150 von rechts fließt das zu reinigende Abwasser zunächst im Wesentlichen in vertikaler Richtung nach unten und danach wieder im Wesentlichen in vertikaler Richtung nach oben, um durch den an dem rechten Pflanzenbeckenrand angeordneten Papierfilter 156 aus dem Pflanzenbecken 146 auszutreten. In dem Papierfilter 156 befindet sich als Filtermedium unter anderem kleingehäckseltes Altpapier.

In dem Pflanzenbecken 146 sind des Weiteren im linken unteren Bereich mehrere Algenbälle 158 der Sorte Cladophora Aegagropila angeordnet, die frei in dem linken Teil des Pflanzenbeckens 146 schwimmen. Weiterhin sind im oberen Bereich 160 des im Pflanzenbecken 146 befindlichen zu reinigenden Abwassers gemahlene Samen der Frucht des Baumes Moringa Oleifera vorgesehen, mit welchen Bakterien abgetötet werden. Die gemahlene Samen werden an dem Austritt aus dem Pflanzenbecken 146 durch geeignete - nicht eingezeichnete - mechanische Filtermittel vor dem Papierfilter 156 gehindert. Bei dem mechanischen Mittel könnte es sich beispielsweise um ein Gitter mit ausreichend kleinen Gitterlöchern handelt, das derart ausgebildet bzw. geformt ist, dass keine Verstopfungen beim Austritt des aus dem Pflanzenbecken 146 austretenden Wassers auftreten. Mechanische Filtermittel wären beispielsweise dann nicht erforderlich, wenn der Wasseraustritt aus dem Pflanzenbecken 146 in einem unteren Bereich - unterhalb des Bereichs 160 - des Pflanzenbeckens 146 angeordnete wäre.

Fig. 6 zeigt in einer Seitenansicht ein weiteres Pflanzenbecken 162, in welches das zu reinigende Abwasser von der linken Seite - mit der Pfeilrichtung 148 angedeutet - eingebracht wird. Das Pflanzenbecken 162 weist nur eine geringe Wassertiefe auf. Im linken Bereich des Pflanzenbeckens 162 sind Farngewächse 163 und Presslinge 164 gemahlener Samen der Frucht des Baumes Moringa Oleifera vorgesehen. Die Größe der Presslinge 164 sind mit der eines Eishockeypucks vergleichbar. Zwischen der Wasseroberfläche 154 und dem Boden des Pflanzenbeckens 162 ist eine Filtermatte 166 angeordnet, die für das zu reinigende Abwasser durchlässig ist. Zwischen der Filtermatte 166 und dem Boden des Pflanzenbeckens 162 sind ebenfalls gemahlene Samen der Frucht des Baumes Moringa Oleifera vorgesehen. Für die Samen ist jedoch die Filtermatte 166 nicht durchlässig, so dass über nahezu den gesamten Bodenbereich des Pflanzenbeckens 162 ein Filtermittel ortsfest vorgesehen ist. Quer zur grundsätzlichen Fließrichtung 148 des zu reinigenden Abwassers in dem Pflanzenbecken 162 sind schräg hintereinander angeordnete Platten 168 vorgesehen, die für das zu reinigende Wasser eine geringe Durchlässigkeit aufweisen. Die Platten erstrecken sich von oben bis unter die Wasseroberfläche 154, jedoch nicht vollständig bis zur Filtermatte 166. Von den Platten 168 wird das durch das Pflanzenbecken 162 fließende zu reinigende Abwasser im Sinn eines Schrägklärprinzips in Richtung der Filtermatte 166 bzw. des Bodens des Pflanzenbeckens 162 geleitet, so dass eine möglichst große Wechselwirkung des zu reinigenden Abwassers mit dem zwischen Filtermatte 166 und Boden des Pflanzenbeckens 162 befindlichen Filtermaterials zu gewährleisten.

Im rechten Bereich des Pflanzenbeckens 162 sind mehrere - auf Grund einer einfachen Darstellung ist lediglich einer gezeigt - künstlich hergestellte Filter 170 ortsfest vorgesehen, die beispielsweise Lehm, Teeblätter, Kaffeesatz und Reishülsen aufweisen. Auch hiermit können in dem zu reinigenden Abwasser befindliche Bakterien, Krankheitserreger und Keime abgetötet werden.

Fig. 7 zeigt in einer schematischen Seitenansicht ein Becken 172, das einen Teil einer erfindungsgemäßen Pflanzenkläranlage darstellt. In welches zu reinigendes Abwasser aus Richtung des Pfeils 148 eingeleitet wird und in welchem keine Pflanzen angeordnet sind. Das in das Becken 172 eingeleitete zu reinigende Abwasser durchläuft das Becken 172 von links nach rechts und wird - was lediglich schematisch angedeutet ist - auf der rechten Seite in Richtung 174 von dem Becken 172 abgeführt. In dem Becken 172 ist ein einen Wärmekreislauf aufweisendes Heizmittel 176 angeordnet. Das Heizmittel 176 weist einen im Gebäude angeordneten Durchlauferhitzer 178 auf, mit welchem das über die Verbindungsleitungen 180 in dem Wärmekreislauf zirkulierende Wärmetauschmedium erhitzt wird. Das Wärmetauschmedium wird mit der Pumpe 182 durch den Wärmekreislauf gepumpt. In dem Becken 172 ist ein Wärmetauscher 184 vorgesehen, der an die Verbindungsleitungen 180 des Wärmekreislaufs angeschlossen ist. Durch den Wärmetauscher 184 wird das von der Pumpe 182 geförderte und von dem Durchlauferhitzer 178 erhitzte Wärmetauschmedium geleitet. Hierdurch wird das im Becken 172 befindliche zu reinigende Abwasser für mindestens eine Stunde auf eine Temperatur von mindestens 60 Grad Celsius erhitzt. Somit können im zu reinigenden Abwasser befindliche Keime und Legionellen abgetötet werden.

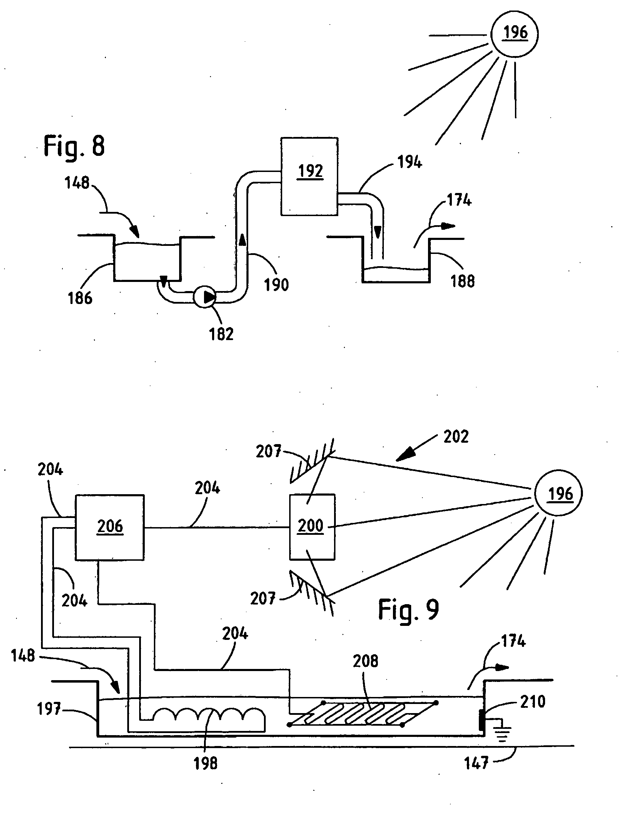

Fig. 8 zeigt in einer Seitenansicht zwei Becken 186, 188, die einen Teil einer erfindungsgemäßen Pflanzenkläranlage darstellen. Zu reinigendes Abwasser wird - wie schematisch mit Pfeil 148 angedeutet ist - zunächst in das Becken 186 geleitet. Von dort wird es mit der Pumpe 182 über die Verbindungsleitung 190 zu dem in Form eines Solarkollektors 192 ausgebildeten Durchlauferhitzer gefördert. Das zu reinigende Abwasser durchläuft den Solarkollektor 192 und wird über die Verbindungsleitung 194 in das Becken 188 geleitet. Der Solarkollektor 192 und somit das darin befindliche Abwasser wird von der Sonne 196 aufgeheizt, so dass auch hiermit im zu reinigenden Wasser befindliche Keime und Bakterien abgetötet werden können.

Fig. 9 zeigt in einer schematischen Seitenansicht ein Becken 197, welches ein Teil einer erfindungsgemäßen Pflanzenkläranlage darstellt und auf einem Dach 147 angeordnet ist. Auch hier wird das zu reinigende Abwasser von links in das Becken 197 eingeleitet und nach dessen Durchlaufen von links nach rechts auf der rechten Seite aus dem Becken 197 abgeführt. In dem Becken 197 ist eine elektrische Heizspule bzw. ein elektrischer Heizwiderstand 198 angeordnet, der mit der Solarzelle 200 der Potovoltaikanlage 202 über die elektrischen Leitungen 204 elektrisch in Verbindung steht. Die Solarzelle 200 wandelt Lichtstrahlen der Sonne 196 in elektrischen Strom um. Der elektrische Strom wird über die elektrischen Leitungen 204 der elektrischen Einrichtung 206 zugeführt. Mit den Spiegeln 207 werden Lichtstrahlen der Sonne 196 auf die Solarzelle 200 geleitet, die ohne die Spiegel 207 nicht auf die Solarzelle 200 auftreffen würden. Sowohl die Solarzelle 200 als auch die Spiegel 207 könnten auf den jeweiligen Stand der Sonne 196 ausgerichtet werden, beispielsweise mit - nicht gezeigten - motorisch angetriebenen Schwenkvorrichtungen. Die elektrische Einrichtung 206 weist insbesondere einen Akkumulator auf, in welchem die von der Solarzelle 200 erzeugte elektrische Energie speicherbar ist und mit welchem einzelne Komponenten der Pflanzenkläranlage auch dann betreibbar sind, wenn zeitweise kein Sonnenlicht vorhanden ist. Die elektrische Einrichtung 206 kann des Weiteren Steuer- bzw. Regeleinheiten sowie in Spannungs-, Strom- und Frequenzwandler bzw. Umrichter aufweisen. An die elektrische Einrichtung 206 ist über elektrische Leitungen 204 ein elektrischer Heizwiderstand 198 angeschlossen, so dass mit Hilfe des elektrischen Heizwiderstands 198 das im Becken 197 befindliche zu reinigende Abwasser - nach dem Tauchsiederprinzip - erhitzbar ist.

In dem Becken 197 sind weiterhin blanke elektrische Leitungen 208 vorgesehen, die ebenfalls über die elektrischen Leitungen 204 mit der elektrischen Einrichtung 206 in Verbindung stehen. Aufgrund des durch die blanken elektrischen Leitungen 208 geleiteten elektrischen Stroms hoher Spannung und geringer Stromstärke bildet sich zwischen den blanken elektrischen Leitungen 208 und der Polfläche 210 ein elektrisches Feld aus, mit welchem das in dem Becken 197 befindliche Abwasser elektrolytisch gereinigt wird.

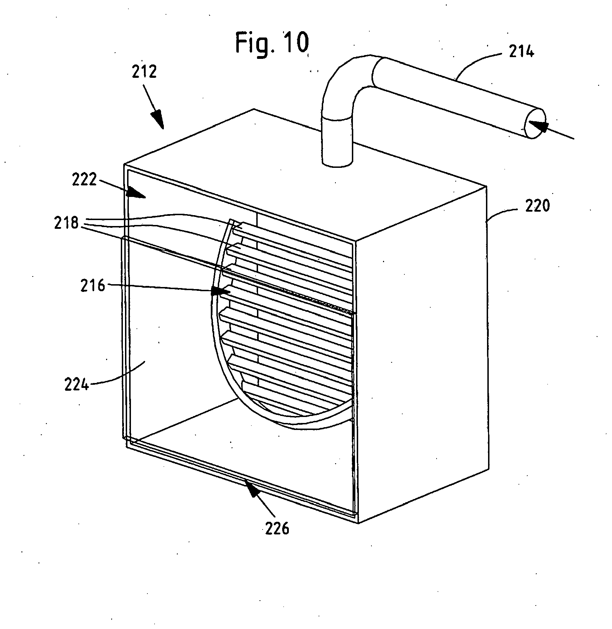

Fig. 10 zeigt eine Vorrichtung 212 zum Einbringen von Sauerstoff in das zu reinigende Abwasser. Die Vorrichtung 212 könnte beispielsweise in einem Bereich nahe der Zuführreinheit einer erfindungsgemäßen Pflanzenkläranlage angeordnet sein, um in das zu reinigende Abwasser in einem möglichst frühen Zustand der Klärung bzw. Reinigung Sauerstoff einzutragen. Die Vorrichtung 212 könnte jedoch auch inmitten einer Pflanzenkläranlage vorgesehen sein, beispielsweise dort, wo Pflanzen geringen Sauerstoffeintrags bezüglich der Fließrichtung des zu reinigenden Wassers vorangegangenen sind. Die Vorrichtung 212 weist eine Abwasserzuführung 214 auf, die in diesem Ausführungsbeispiel durch ein Rohr realisiert ist. Das von der Abwasserzuführung 214 zugeführte Abwasser fällt im freien Fall auf ein Prallgitter 216, wodurch das Abwasser in Tropfen zerspringen kann. Das Prallgitter 216 weist mehrere quer und/oder schräg zur Fallrichtung des zu reinigenden Abwassers angeordnete Rippen 218 auf, die im Konkreten durch Metallstreifen gebildet sind. Die Vorrichtung 212 weist ein Gehäuse 220 auf, welches zumindest größtenteils das Prallgitter 216 umgibt. Das Gehäuse 220 umfasst einen offenen Bereich 222, über welchen Umgebungsluft zum Prallgitter 216 gelangen kann, so dass Sauerstoff von der Umgebungsluft in das zu reinigende Abwasser eingetragen werden kann. Unterhalb des offenen Bereichs 222 weist das Gehäuse 220 eine Glasplatte 224 auf, so dass das Prallgitter 216 vom außen sichtbar ist, um beispielsweise Verunreinigungen oder Ablagerungen auf dem Prallgitter 216 ohne weiteres sehen zu können. Mit einer solchen Vorrichtung kann bei einem relativ geringen Volumenstrom von ca. 30 l/h eine Sauerstoffsättigung von mindestens 25 % erreicht werden. Höhere Volumenströme (60 l/h und 100 l/h) bewirken einen Sauerstoffeintrag über 50 % (nämlich beispielsweise 57 % und 68 %). Nachdem das zu reinigende Abwasser die Vorrichtung 212 durchlaufen hat, tritt es durch den am Boden der Vorrichtung 212 bzw. des Gehäuses 220 vorgesehenen Spalt 226 aus der Vorrichtung 212 aus und wird in der Pflanzenkläranlage weiterverarbeitet.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Pflanzenkläranlage zum Reinigen von Abwasser, mit mindestens einem Pflanzenbehälter (32), einer Zuführeinheit (16), einer Abführeinheit (36) und Pflanzen, wobei mit der Zuführeinheit (16) zu reinigendes Abwasser der Pflanzenkläranlage (10) zuführbar ist, wobei mit der Abführeinheit (36) gereinigtes Abwasser von der Pflanzenkläranlage (10) abführbar ist, wobei die Pflanzen in dem Pflanzenbehälter (32) angeordnet und derart ausgebildet sind, dass sie in dem Pflanzenbehälter (32) ohne Substrat angeordnet sind, wobei ein Pflanzenbehälter (32) vorzugsweise mindestens zwei Pflanzenbecken (82 - 98) aufweist, wobei mindestens ein weiterer Behälter (20, 24, 26, 146, 162, 172, 186, 188, 197) vorgesehen sein kann, wobei die Pflanzenkläranlage derart verwendet wird, dass zumindest ein Teil des Pflanzenbehälters (32) auf einem Gebäudedach (147) angeordnet ist, wobei in dem Pflanzenbehälter (32) Pflanzen mindestens zwei unterschiedlicher Pflanzensorten vorgesehen sind, **dadurch gekennzeichnet, dass** in Abhängigkeit der Art des Abwassers - beispielsweise industrielles und/oder sanitäres Abwasser - das zu reinigende Abwasser in einer vorgebbaren Reihenfolge von Pflanzen unterschiedlicher Pflanzensorten reinigbar ist und dass die Pflanzen sich an einer definierten Stelle im Pflanzenbehälter (32) befinden und dort auf dem Boden des Pflanzenbehälters oder auf einer Teichfolie stehen, falls der Pflanzenbehälter mit einer Teichfolie versehen ist.

2. Pflanzenkläranlage nach Anspruch 1, wobei Pflanzen der im Folgenden aufgelisteten Pflanzensorten vorgesehen sind:
- Carex Riparia und/oder
- Carex Elata und/oder
- Carex Gracilis und/oder
- F2, die eine Kreuzung aus der Carex Gracilis und der Carex Elata ist, und/oder
- Juncus Inflexus und/oder
- Carex Acutiformis und/oder
- Scirpus Lacustris und/oder
- Iris Pseudacorus und/oder
- Carex Rostrata und/oder
- Phragmitis Australis.

3. Pflanzenkläranlage nach Anspruch 2, wobei die Reihenfolge von Pflanzen unterschiedlicher Pflanzensorten für sanitäres Abwasser die folgende ist: (a) Juncus Inflexus, (b) Iris Pseudacorus, (c) F2, (d) Carex Elata, (e) Scirpus Lacustris und (f) Iris Pseudacorus.

4. Pflanzenkläranlage nach Anspruch 3, wobei die Pflanzen der Pflanzensorten (e) Scirpus Lacustris und (f) Iris Pseudacorus miteinander gemischt angeordnet sind.

5. Pflanzenkläranlage nach Anspruch 3 oder 4, wobei den Pflanzen der Pflanzensorte Juncus Inflexus Pflanzen der Pflanzensorte Carex Acutiformis nachgeordnet sind und/oder dass die Pflanzen der Pflanzensorte Juncus Inflexus und die Pflanzen der Pflanzensorte Carex Acutiformis miteinander gemischt angeordnet sind.

6. Pflanzenkläranlage nach Anspruch 2, wobei die Reihenfolge von Pflanzen unterschiedlicher Pflanzensorten für industrielles Abwasser die folgende ist: (a) Carex Riparia, (b) Carex Elata, (c) Carex Rostrata, (d) Iris Pseudacorus, (e) Juncus Inflexus, (f) Scirpus Lacustris, (g) Iris Pseudacorus und gegebenenfalls (h) F2.

7. Pflanzenkläranlage nach Anspruch 6, wobei die Pflanzen der Pflanzensorten (b) Carex Elata und (c) Carex Rostrata miteinander gemischt angeordnet sind und/oder dass die Pflanzen der Pflanzensorten (f) Scirpus Lacustris und (g) Iris Pseudacorus miteinander gemischt angeordnet sind und/oder dass zu den Pflanzen der Pflanzensorte (d) Iris Pseudacorus zusätzlich Pflanzen der Pflanzensorte Carex Acutiformis - vorzugsweise im Anzahlverhältnis von 1:4 - vorgesehen sein können.

8. Pflanzenkläranlage nach Anspruch 2, wobei die Reihenfolge von Pflanzen unterschiedlicher Pflanzensorten für sanitäres und industrielles Abwasser die folgende ist: (a) Phragmitis Australis, (b) Juncus Inflexus, (c) Carex Riparia, (d) Carex Elata, (e) Carex Rostrata, (f) Iris Pseudacorus, (g) Scirpus Lacustris, (h) F2 und gegebenenfalls (i) Scirpus Lacustris.

9. Pflanzenkläranlage nach Anspruch 8, wobei die Pflanzen der Pflanzensorten (d) Carex Elata und (e) Carex Rostrata miteinander gemischt angeordnet sind.

10. Pflanzenkläranlage nach einem der Ansprüche 1 bis 9, wobei Pflanzen lediglich einer Pflanzensorte in einem Pflanzenbecken (60, 68, 72, 82 bis 88, 94, 96,) angeordnet sind und/oder dass Pflanzen mindestens zweier Pflanzensorten in einem Pflanzenbecken (32, 64, 76, 90, 92, 98) miteinander gemischt angeordnet sind.

11. Pflanzenkläranlage nach einem der Ansprüche 1 bis 10, wobei mindestens sechs Pflanzenbecken (60, 68, 72, 82 bis 88, 94, 96,) vorgesehen sind, welche jeweils Pflanzen mindestens einer Pflanzensorte aufweisen, die sich vorzugsweise unterscheiden.

12. Pflanzenkläranlage nach einem der Ansprüche 1 bis 11, wobei die Fließrichtung des zu reinigenden Abwassers in Bezug auf die Reihenfolge von Pflanzen unterschiedlicher Pflanzensorten variierbar ist, beispielsweise dadurch, dass das zu reinigende Abwasser nach Durchlaufen eines Pflanzenbeckens (86) anstatt es in das nächste (88), der vorgebbaren Reihenfolge entsprechende Pflanzenbecken zuzuleiten, es einem anderen Pflanzenbecken (90) zuleitbar ist.

13. Pflanzenkläranlage nach einem der Ansprüche 1 bis 12, wobei in mindestens einem Pflanzenbehälter (32) und/oder in einem weiteren Behälter (2, 24, 26, 146, 162, 172, 197) der Pflanzenkläranlage (10) mindestens ein Mittel vorgesehen ist, mit welchem der Grad des zu reinigenden Wassers zumindest hinsichtlich eines vorgebbaren Parameters optimierbar ist.

14. Pflanzenkläranlage nach Anspruch 13, wobei das Mittel - vorzugsweise lebende - Filter (158, 163, 164) oder Filterbereiche (160) aufweist, deren Filterwirkung auf den Einsatz von Pflanzen und/oder Einzellern und/oder Mehrzellern und/oder Bakterien basiert.

15. Pflanzenkläranlage nach Anspruch 14, wobei mindestens ein Algenball (158) - insbesondere mit der Bezeichnung Cladophora Aegagropila - vorgesehen ist und dass zumindest ein Algenball (158) in einem Pflanzenbecken und/oder in einem weiteren Becken (146) der Pflanzenkläranlage (10) angeordnet werden kann.

16. Pflanzenkläranlage nach Anspruch 14 oder 15, wobei mindestens ein Farngewächs (163) und/oder mindestens ein Naturschwamm vorgesehen ist und dass zumindest eine Pflanze eines Farngewächses (163) und/oder ein Naturschwamm in einem Pflanzenbecken (162) der Pflanzenkläranlage (10) angeordnet werden kann.

17. Pflanzenkläranlage nach einem der Ansprüche 13 bis 16, wobei das Mittel Mikroben und/oder Cyano-Bakterien aufweist, die vorzugsweise an Pflanzen der Pflanzenkläranlage (10), insbesondere an deren Wurzelbereich, kultivierbar bzw. anordenbar sind und/oder wobei Kohlendioxid (CO₂) durch das zu reinigende Abwasser geleitet oder geblasen wird, wobei insbesondere das Kohlendioxid in Umgebungsluft gelöst ist oder aus in der Halle bzw. in dem Gebäude ablaufenden chemischen Reaktionen stammt.

18. Pflanzenkläranlage nach einem der Ansprüche 13 bis 17, wobei das Mittel künstlich hergestellte Filter (156, 170) aufweist.

19. Pflanzenkläranlage nach Anspruch 18, wobei mindestens ein Filter (170) in einem Pflanzenbehälter und/oder in einem weiteren Behälter (162) vorgesehen ist, der Lehm und/oder Teeblätter und/oder Kaffeesatz und/oder Reishülsen aufweist.

20. Pflanzenkläranlage nach Anspruch 19, wobei der Filter (170) wie folgt beschrieben herstellbar ist:
- trockener, zerstoßener Lehm wird mit organischen Materialien wie Teeblättern, Kaffeesatz und/oder Reishülsen und etwas Wasser zu einer festen Masse vermischt,
- aus dieser Masse wird ein im Wesentlichen zylindrischer Topf geformt, der an einem Ende geschlossen ist,
- diese Form wird - beispielsweise in der Sonne - getrocknet und dann - beispielsweise in einem Ofen bei einer vorgebbaren Temperatur gebrannt - ausgehärtet,
- der Filter wird mit Stroh umgeben und auf einen Haufen Kuhdung platziert.

21. Pflanzenkläranlage nach Anspruch 18, wobei ein Filter (160, 164) - vorzugsweise zerkleinerte - Samen einer Frucht eines Baumes, insbesondere des Baumes Moringa Oleifera, aufweist und dass der Filter in Form von Presslingen (164) ausgebildet sein könnte, welche in einem Pflanzenbecken und/oder einem weiteren Becken (162) eingegeben sein könnten.

22. Pflanzenkläranlage nach einem der Ansprüche 13 bis 21, wobei mindestens ein Filter am Boden eines Pflanzenbehälters und/oder eines Pflanzenbeckens und/oder eines weiteren Beckens (162) vorgesehen ist, dessen Filtermaterial beispielsweise zwischen Boden des Behälters bzw. Beckens und einer Filtermatte (166) angeordnet ist, wobei die Filtermatte (166) für das zu reinigende Abwasser zumindest teildurchlässig - im Sinn einer Filtermembran - ausgebildet sein könnte.

23. Pflanzenkläranlage nach einem der Ansprüche 13 bis 22, wobei mindestens ein Strömungsleitmittel (150, 152, 168) vorgesehen ist, mit welchem ein Durchfließen des zu reinigenden Abwassers in horizontaler und/oder vertikaler Richtung durch ein Becken (146, 162) und/oder einen Pflanzenbehälter und/oder ein Pflanzenbecken bewirkbar ist.

24. Pflanzenkläranlage nach Anspruch 23, wobei ein Strömungsleitmittel mindestens zwei nebeneinander und/oder hintereinander - vorzugsweise schräg - angeordnete Platten (168) aufweist, welche vorzugsweise zumindest weitgehend eine Reinigung des Abwassers im Sinn eines Schrägklärprinzips ermöglichen, indem beispielsweise das zu reinigende Abwasser in Richtung eines am Boden des Beckens (162) angeordneten Filters leitbar ist, wobei eine Platte (168) für zu reinigendes Abwasser zumindest teilweise durchlässig ausgebildet sein kann.

25. Pflanzenkläranlage nach Anspruch 23 oder 24, wobei ein Strömungsleitmittel mindestens zwei nebeneinander und/oder hintereinander - vorzugsweise im Wesentlichen vertikal - angeordnete Platten (150, 152) aufweist, welche insbesondere alternierend sich von oben unter die Wasseroberfläche und vom Boden des Beckens sich nach oben in Richtung der Wasseroberfläche und gegebenenfalls sich zumindest bereichsweise bis über die Wasseroberfläche hinaus erstreckend angeordnet sind, so dass das zu reinigende Abwasser alternierend in horizontaler und vertikaler Richtung durch das Becken (146) leitbar ist.

26. Pflanzenkläranlage nach einem der Ansprüche 1 bis 25, wobei das zu reinigende Abwasser für eine vorgebbare Zeitdauer mit mindestens einem Heizmittel (176) erhitzbar ist, vorzugsweise auf mindestens 50 bis 60 Grad Celsius für die Dauer mindestens einer Stunde.

27. Pflanzenkläranlage nach Anspruch 26, wobei das Heizmittel mindestens einen Durchlauferhitzer (192) aufweist, durch welchen das zu reinigende Abwasser leitbar ist, wobei die Fließmenge und/oder die Fließgeschwindigkeit des zu reinigenden Abwassers vorgebbar und/oder steuerbar ist.

28. Pflanzenkläranlage nach Anspruch 26 oder 27, wobei das Heizmittel (176) mindestens einen Wärmekreislauf oder eine Wärmepumpe aufweist, dass der Wärmekreislauf Verbindungsleitungen (180), mindestens einen Durchlauferhitzer (178), mindestens einen in einem Pflanzenbecken oder in einem weiteren Becken (172) angeordneten Wärmetauscher (184) und ein Wärmetauschmedium aufweist, wobei das Wärmetauschmedium in dem Durchlauferhitzer (178) aufheizbar und über die Verbindungsleitungen (180) zum Wärmetauscher (184) leitbar ist, um das zu reinigende Abwasser zu erhitzen.

29. Pflanzenkläranlage nach Anspruch 28, wobei das Wärmetauschmedium eine Flüssigkeit oder ein Gas aufweist, und dass das Wärmetauschmedium mit einer Pumpe (182) in dem Wärmekreislauf zirkulierbar ist.

30. Pflanzenkläranlage nach Anspruch 28 oder 29, wobei der Durchlauferhitzer einen Solarkollektor (192) aufweist und/oder einer in dem Gebäude angeordneten Maschine zugeordnet ist, welche beim Betrieb Wärmeenergie an das durch den Durchlauferhitzer zirkulierende Wärmetauschmedium abgibt, und dass der Solarkollektor (192) mindestens eine Einrichtung (207) zur optischen Konzentration von Sonnenlicht aufweisen kann.

31. Pflanzenkläranlage nach einem der Ansprüche 26 bis 30, wobei das zu reinigende Abwasser nach dem Tauchsiederprinzip erhitzbar ist, wobei der elektrische Strom zum Erhitzen eines Wärmewiderstands mit Hilfe einer Photovoltaikanlage (202), vorzugsweise mit Solarzellen (200) oder Photoelementen, erzeugbar sein kann.

32. Pflanzenkläranlage nach einem der Ansprüche 26 bis 31, wobei ein Solarkollektor (192) und/oder ein Teil (200, 207) der Photovoltaikanlage (202) derart angeordnet ist, dass er auf den aktuellen Sonderstand ausrichtbar sind.

33. Pflanzenkläranlage nach Anspruch 31 oder 32, wobei mit dem mit der Photovoltaikanlage (202) erzeugten elektrischen Strom auch mindestens eine weitere Komponente der Pflanzenkläranlage betreibbar ist, beispielsweise eine elektrisch betriebene Wasserpumpe (182).

34. Pflanzenkläranlage nach einem der Ansprüche 31 bis 33, wobei der mit der Photovoltaikanlage (202) erzeugte elektrische Strom in mindestens einem Akkumulator speicherbar ist.

35. Pflanzenkläranlage nach einem der Ansprüche 26 bis 34, wobei das zu reinigende Abwasser in einem Becken (172, 197) oder Pufferbecken erhitzbar ist, welches in Fließrichtung des zu reinigenden Abwassers am Anfang und/oder am Ende der Pflanzenkläranlage (10) vorgesehen sein kann.

36. Pflanzenkläranlage nach einem der Ansprüche 26 bis 35, wobei die dem zu reinigenden Abwasser zugeführte Wärmeenergie zumindest teilweise zur Heizung des Gebäudes nutzbar ist, beispielsweise mit Hilfe einer hierfür vorgesehenen Wärmepumpe.

37. Pflanzenkläranlage nach einem der Ansprüche 1 bis 36, wobei das zu reinigende Abwasser zumindest teilweise elektrolytisch reinigbar ist, insbesondere dadurch, dass elektrische Leitungen (208) in einem Pflanzenbehälter oder weiteren Behälter (197) vorgesehen sind, durch welche elektrischer Strom leitbar ist.

38. Pflanzenkläranlage nach einem der Ansprüche 1 bis 37, wobei das zu reinigende Abwasser zumindest teilweise durch Beaufschlagen mit hochenergetischer Strahlung reinigbar ist, insbesondere mit Licht des ultravioletten Wellenlängenspektrums, und dass hierzu das zu reinigende Abwasser vorzugsweise in einem Becken (162) geringer Wassertiefe und relativ großer Wasseroberfläche leitbar ist.

39. Pflanzenkläranlage nach Anspruch 38, wobei das ultraviolette Licht der Sonne (196) nutzbar ist und/oder dass das ultraviolette Licht von mindestens einer UV-Lampe erzeugbar ist.

40. Pflanzenkläranlage nach einem der Ansprüche 1 bis 39, wobei zum Filtern des zu reinigenden Abwassers mindestens ein Papierfilter (156) vorgesehen ist, welcher zerkleinertes Altpapier aufweisen könnte.

41. Pflanzenkläranlage nach einem der Ansprüche 1 bis 40, wobei ein Filter oder Filterbereich mit kleingehäckseltem Grünschnitt vorgesehen ist, mit welchem das zu reinigende Abwasser zumindest teilweise reinigbar ist.

42. Pflanzenkläranlage nach einem der Ansprüche 1 bis 41, wobei die Mittel an einem vorgebbaren Ort in der Pflanzenkläranlage angeordnet sind.

43. Pflanzenkläranlage nach einem der Ansprüche 1 bis 42, wobei die Verweildauer des zu reinigenden Abwassers in einem Pflanzenbehälter und/oder in einem weiteren Behälter und/oder in einem Pflanzenbecken derart vorgebbar ist, dass eine nahezu optimale Klärwirkung erzielbar ist.

44. Pflanzenkläranlage nach einem der Ansprüche 1 bis 43, wobei eine Vorrichtung zum Einbringen von Sauerstoff in das zu reinigende Abwasser vorgesehen ist, wobei die Vorrichtung eine Abwasserzuführung aufweist, wobei das von der Abwasserzuführung zugeführte Abwasser im freien Fall auf ein Prallgitter fällt, wodurch das Abwasser in Tropfen zerspringen kann, wobei die Vorrichtung ein Gehäuse aufweisen kann, welches zumindest größtenteils das Prallgitter umgibt, und wobei das die Vorrichtung durchlaufene Abwasser in der Pflanzenkläranlage weiterverarbeitbar ist.

45. Verfahren zum Reinigen von Abwasser mit einer Pflanzenkläranlage, wobei die Pflanzenkläranlage (10) einen Pflanzenbehälter (32), eine Zuführeinheit (16), eine Abführeinheit (36) und Pflanzen aufweist und insbesondere nach einem der Ansprüche 1 bis 44 ausgebildet ist, wobei mit der Zuführeinheit (16) zu reinigendes Abwasser der Pflanzenkläranlage (10) zugeführt wird, wobei mit der Abführeinheit (36) gereinigtes Abwasser von der Pflanzenkläranlage (10) abgeführt wird, wobei die Pflanzen in dem Pflanzenbehälter (32) angeordnet und derart ausgebildet sind, dass sie in dem Pflanzenbehälter (32) ohne Substrat angeordnet sind, wobei ein Pflanzenbehälter (32) vorzugsweise mindestens zwei Pflanzenbecken (82 - 98) aufweist, wobei mindestens ein weiterer Behälter (20, 24, 26, 146, 162, 172, 186, 188, 197) vorgesehen sein kann, wobei zumindest ein Teil des Pflanzenbehälters (32) auf einem Gebäudedach (147) angeordnet ist, wobei in dem Pflanzenbehälter (32) Pflanzen mindestens zwei unterschiedlicher Pflanzensorten vorgesehen sind und wobei in Abhängigkeit der Art des Abwassers - beispielsweise industrielles und/oder sanitäres Abwasser - das zu reinigende Abwasser in einer vorgebbaren Reihenfolge von Pflanzen unterschiedlicher Pflanzensorten gereinigt wird, und wobei die Pflanzen sich an einer definierten Stelle im Pflanzenbehälter (32) befinden und dort auf dem Boden des Pflanzenbehälters oder auf einer Teichfolie stehen, falls der Pflanzenbehälter mit einer Teichfolie versehen ist.

## Claims

1. Plant-based treatment plant for purifying waste water, having at least one plant container (32), a feed unit (16), a discharge unit (36) and plants, wherein waste water to be purified can be fed to the plant-based treatment plant (10) by using the feed unit (16), wherein purified water can be discharged from the plant-based treatment plant (10) by using the discharge unit (36), wherein the plants are arranged in the plant container (32) and are formed in such a way that they are arranged in the plant container (32) without any substrate, wherein a plant container (32) preferably has at least two plant troughs (82-98), wherein at least one further container (20, 24, 26, 146, 162, 172, 186, 188, 197) can be provided, wherein the plant-based treatment plant is used in such a way that at least part of the plant container (32) is arranged on a building roof (147), wherein plants of at least two different plant species are provided in the plant container (32), **characterized in that**, depending on the type of waste water - for example industrial and/or sanitary waste water - the waste water to be purified can be purified in a predefined sequence of plants of different plant species, and **in that** the plants are located at a defined point in the plant container (32) and there stand on the bottom of the plant container or on a pond liner, if the plant container is provided with a pond liner.

2. Plant-based treatment plant according to Claim 1, wherein plants of the plant species listed below are provided:
- Carex riparia and/or
- Carex elata and/or
- Carex gracilis and/or
- F2, which is a hybrid of Carex gracilis and Carex elata, and/or
- Juncus inflexus and/or
- Carex acutiformis and/or
- Scirpus lacustris and/or
- Iris pseudacorus and/or
- Carex rostrata and/or
- Phragmites australis.

3. Plant-based treatment plant according to Claim 2, wherein the sequence of plants of different plant species for sanitary waste water is the following: (a) Juncus inflexus, (b) Iris pseudacorus, (c) F2, (d) Carex elata, (e) Scirpus lacustris and (f) Iris pseudacorus.

4. Plant-based treatment plant according to Claim 3, wherein the plants of the plant species (e) Scirpus lacustris and (f) Iris pseudacorus are arranged mixed with one another.

5. Plant-based treatment plant according to Claim 3 or 4, wherein plants of the plant species Carex acutiformis are arranged downstream of the plants of the plant species Juncus inflexus, and/or wherein the plants of the plant species Juncus inflexus and the plants of the plant species Carex acutiformis are arranged mixed with one another.

6. Plant-based treatment plant according to Claim 2, wherein the sequence of plants of different plant species for industrial waste water is the following: (a) Carex riparia, (b) Carex elata, (c) Carex rostrata, (d) Iris pseudacorus, (e) Juncus inflexus, (f) Scirpus lacustris, (g) Iris pseudacorus and, if appropriate, (h) F2.

7. Plant-based treatment plant according to Claim 6, wherein the plants of the plant species (b) Carex elata and (c) Carex rostrata are arranged mixed with one another, and/or wherein the plants of the plant species (f) Scirpus lacustris and (g) Iris pseudacorus are arranged mixed with one another, and/or wherein, in addition to the plants of the plant species (d) Iris pseudacorus, plants of the plant species Carex acutiformis can be provided - preferably in a numerical ratio of 1:4.

8. Plant-based treatment plant according to Claim 2, wherein the sequence of plants of different plant species for sanitary and industrial waste water is the following: (a) Phragmites australis, (b) Juncus inflexus, (c) Carex riparia, (d) Carex elata, (e) Carex rostrata, (f) Iris pseudacorus, (g) Scirpus lacustris, (h) F2 and, if appropriate, (i) Scirpus lacustris.

9. Plant-based treatment plant according to Claim 8, wherein the plants of the plant species (d) Carex elata and (e) Carex rostrata are arranged mixed with one another.

10. Plant-based treatment plant according to one of Claims 1 to 9, wherein plants of only one plant species are arranged in one plant trough (60, 68, 72, 82 to 88, 94, 96) and/or wherein plants of at least two plant species are arranged mixed with one another in one plant trough (32, 64, 76, 90, 92, 98) .

11. Plant-based treatment plant according to one of Claims 1 to 10, wherein at least six plant troughs (60, 68, 72, 82 to 88, 94, 96) are provided, each having plants of at least one plant species, which preferably differ from one another.

12. Plant-based treatment plant according to one of Claims 1 to 11, wherein the direction of flow of the waste water to be purified in relation to the sequence of plants of different plant species can be varied, for example in that the waste water to be purified, after passing through a plant trough (86), instead of being led into the next (88) plant trough corresponding to the predefinable sequence, can be led to another plant trough (90).

13. Plant-based treatment plant according to one of Claims 1 to 12, wherein, in at least one plant container (32) and/or in a further container (2, 24, 26, 146, 162, 172, 197) of the plant-based treatment plant (10), there is provided at least one means with which the degree of the waste water to be purified can be optimized, at least with regard to a predefinable parameter.

14. Plant-based treatment plant according to Claim 13, wherein the means has filters (158, 163, 164)-preferably living - or filter regions (160), the filter action of which is based on the use of plants and/or single-celled organisms and/or multi-celled organisms and/or bacteria.

15. Plant-based treatment plant according to Claim 14, wherein at least one algal ball (158) - in particular having the description Cladophora aegagropila - is provided, and wherein at least one algal ball (158) can be arranged in a plant trough and/or in a further trough (146) of the plant-based treatment plant (10).

16. Plant-based treatment plant according to Claim 14 or 15, wherein at least one fern (163) and/or at least one natural sponge is/are provided, and wherein at least one plant of a fern (163) and/or a natural sponge can be arranged in a plant trough (162) of the plant-based treatment plant (10).

17. Plant-based treatment plant according to one of Claims 13 to 16, wherein the means has microbes and/or cyano-bacteria, which can preferably be cultivated or arranged on plants of the plant-based treatment plant (10), in particular in the root area of the same, and/or wherein carbon dioxide (CO₂) is led or blown through the waste water to be purified, wherein in particular the carbon dioxide is dissolved in ambient air or originates from chemical reactions proceeding in the hall or in the building.

18. Plant-based treatment plant according to one of Claims 13 to 17, wherein the means has artificially produced filters (156, 170).

19. Plant-based treatment plant according to Claim 18, wherein at least one filter (170) which has clay and/or tea leaves and/or coffee grounds and/or rice husks is provided in a plant container and/or in a further container (162).

20. Plant-based treatment plant according to Claim 19, wherein the filter (170) can be produced as described below:
- dry, pulverized clay is mixed with organic materials such as tea leaves, coffee grounds and/or rice husks and some water to form a solid compound,
- from this compound, a substantially cylindrical pot which is closed at one end is formed,
- this form is dried - for example in the sun - and then cured - for example fired in an oven at a predefinable temperature,
- the filter is surrounded with straw and placed on a heap of cow dung.

21. Plant-based treatment plant according to Claim 18, wherein a filter (160, 164) has - preferably comminuted - seeds of a fruit of a tree, in particular of the tree Moringa oleifera, and wherein the filter can be formed in the shape of briquettes (164), which can be put into a plant trough and/or a further trough (162).

22. Plant-based treatment plant according to one of Claims 13 to 21, wherein at least one filter is provided on the bottom of a plant container and/or a plant trough and/or a further trough (162), the filter material of which is, for example, arranged between the bottom of the container or trough and a filter mat (166), wherein the filter mat (166) can be formed so as to be at least partly permeable to the waste water to be purified - with the effect of a filter membrane.

23. Plant-based treatment plant according to one of Claims 13 to 22, wherein at least one flow guiding means (150, 152, 168) is provided, with which a through flow of the waste water to be purified in the horizontal and/or vertical direction through a trough (146, 162) and/or a plant container and/or a plant trough can be effected.

24. Plant-based treatment plant according to Claim 23, wherein a flow guiding means has at least two plates (168) arranged beside one another and/or one after another - preferably obliquely - which preferably at least largely permit purification of the waste water with the effect of an inclined waste treatment principle, in that, for example, the waste water to be purified can be led in the direction of a filter arranged on the bottom of the trough (162), wherein a plate (168) can be formed so as to be at least partly permeable to waste water to be purified.

25. Plant-based treatment plant according to Claim 23 or 24, wherein a flow guiding means has at least two plates (150, 152) arranged beside one another and/or one after another - preferably substantially vertically - which are in particular arranged alternately extending under the water surface from above and upwards from the bottom of the trough in the direction of the water surface and, if appropriate, are arranged so as to extend beyond the water surface, at least in some regions, so that the waste water to be purified can be led through the trough (146) alternately in the horizontal and vertical directions.

26. Plant-based treatment plant according to one of Claims 1 to 25, wherein the waste water to be purified can be heated for a predefinable time period by using at least one heating means (176), preferably to at least 50 to 60 degrees Celsius for the duration of at least one hour.

27. Plant-based treatment plant according to Claim 26, wherein the heating means has at least one instantaneous heater (192), through which the waste water to be purified can be led, wherein the volume flow and/or the flow velocity of the waste water to be purified can be predefined and/or controlled.

28. Plant-based treatment plant according to Claim 26 or 27, wherein the heating means (176) has at least one heating circuit or a heat pump, wherein the heating circuit has connecting lines (180), at least one instantaneous heater (178), at least one heat exchanger (184) arranged in a plant trough or in a further trough (172), and a heat exchange medium, wherein the heat exchange medium can be heated in the instantaneous heater (178) and led via the connecting lines (180) to the heat exchanger (184) in order to heat the waste water to be purified.

29. Plant-based treatment plant according to Claim 28, wherein the heat exchange medium has a liquid or gas, and wherein the heat exchange medium can be circulated in the heating circuit by using a pump (182) .

30. Plant-based treatment plant according to Claim 28 or 29, wherein the instantaneous heater has a solar collector (192) and/or is assigned to a machine arranged in the building which, during operation, gives up thermal energy to the heat exchange medium circulating through the instantaneous heater, and wherein the solar collector (192) can have at least one device (207) for the optical concentration of sunlight.

31. Plant-based treatment plant according to one of Claims 26 to 30, wherein the waste water to be purified can be heated in accordance with the immersion heater principle, wherein the electric power for heating a thermal resistance can be generated with the aid of a photovoltaic installation (202), preferably having solar cells (200) or photo elements.

32. Plant-based treatment plant according to one of Claims 26 to 31, wherein a solar collector (192) and/or a part (200, 207) of the photovoltaic installation (202) is arranged in such a way that it can be aligned with the current position of the sun.

33. Plant-based treatment plant according to Claim 31 or 32, wherein, by using the electric power generated by the photovoltaic installation (202), at least one further component of the plant-based treatment plant can also be operated, for example an electrically operated water pump (182).

34. Plant-based treatment plant according to one of Claims 31 to 33, wherein the electric power generated by the photovoltaic installation (202) can be stored in at least one accumulator.

35. Plant-based treatment plant according to one of Claims 26 to 34, wherein the waste water to be purified can be heated in a trough (172, 197) or buffer trough which, in the flow direction of the waste water to be purified, can be provided at the start and/or at the end of the plant-based treatment plant (10).

36. Plant-based treatment plant according to one of Claims 26 to 35, wherein the thermal energy supplied to the waste water to be purified can be used at least partly for heating the building, for example with the aid of a heat pump provided for this purpose.

37. Plant-based treatment plant according to one of Claims 1 to 36, wherein the waste water to be purified can at least partly be purified electrolytically, in particular by electric conductors (208) through which electric power can be conducted being provided in a plant container or further containers (197).

38. Plant-based treatment plant according to one of Claims 1 to 37, wherein the waste water to be purified can at least partly be purified by the application of high-energy radiation, in particular with light from the ultraviolet wavelength spectrum, and wherein, for this purpose, the waste water to be purified can preferably be led into a trough (162) of low water depth and relatively large water surface.

39. Plant-based treatment plant according to Claim 38, wherein the ultraviolet light from the sun (196) can be utilized and/or wherein the ultraviolet light can be generated by at least one UV lamp.

40. Plant-based treatment plant according to one of Claims 1 to 39, wherein, in order to filter the waste water to be purified, at least one paper filter (156), which could include comminuted waste paper, is provided.

41. Plant-based treatment plant according to one of Claims 1 to 40, wherein a filter or filter region having finely chopped garden waste, with which the waste water to be purified can at least partly be purified, is provided.

42. Plant-based treatment plant according to one of Claims 1 to 41, wherein the means are arranged at a predefinable location in the plant-based treatment plant.

43. Plant-based treatment plant according to one of Claims 1 to 42, wherein the residence time of the waste water to be purified in a plant container and/or in a further container and/or in a plant trough can be predefined in such a way that a virtually optimal clarification action can be achieved.

44. Plant-based treatment plant according to one of Claims 1 to 43, wherein a device for introducing oxygen into the waste water to be purified is provided, wherein the device has a waste water supply, wherein the waste water supplied by the waste water supply falls onto an impingement grating in free fall, as a result of which the waste water can break down into droplets, wherein the device can have a housing which surrounds the impingement grating, at least for the most part, and wherein the waste water running through the device can be processed further in the plant-based treatment plant.

45. Method for purifying waste water by using a plant-based treatment plant, wherein the plant-based treatment plant (10) has a plant container (32), a feed unit (16), a discharge unit (36) and plants and in particular is constructed according to one of Claims 1 to 44, wherein waste water to be purified is fed to the plant-based treatment plant (10) by the feed unit (16), wherein purified waste water is discharged from the plant-based treatment plant (10) via the discharge unit (36), wherein the plants are arranged in the plant container (32) and are formed in such a way that they are arranged in the plant container (32) without any substrate, wherein a plant container (32) preferably has at least two plant troughs (82-98), wherein at least one further container (20, 24, 26, 146, 162, 172, 186, 188, 197) can be provided, wherein at least part of the plant container (32) is arranged on a building roof (147), wherein plants of at least two different plant species are provided in the plant container (32), and wherein, depending on the type of waste water - for example industrial and/or sanitary waste water - the waste water to be purified is purified in a predefinable sequence of plants of different plant species, and wherein the plants are located at a defined point in the plant container (32) and there stand on the bottom of the plant container or on a pond liner, if the plant container is provided with a pond liner.

## Revendications

1. Installation d'épuration végétale destinée à épurer de l'eau usée et présentant au moins un récipient (32) à végétaux, une unité d'amenée (16), une unité d'évacuation (36) et des végétaux, l'eau à épurer pouvant être amenée à l'installation (10) d'épuration végétale par l'unité d'amenée (16), l'eau épurée pouvant être évacuée de l'installation (10) d'épuration végétale par l'unité d'évacuation (36),
les végétaux étant disposés dans le récipient (32) à végétaux et étant configurés de manière à être disposés sans substrat dans le récipient (32) à végétaux,
un récipient (32) à végétaux présentant de préférence au moins deux bacs à végétaux (82-98),
au moins un autre récipient (20, 24, 26, 146, 162, 172, 186, 188, 197) pouvant être prévu,
l'installation d'épuration végétale étant utilisée en disposant au moins une partie du récipient (32) à végétaux sur le toit (147) du bâtiment,
des végétaux d'au moins deux sortes différentes de végétaux étant prévus dans le récipient (32) à végétaux,
**caractérisée en ce que**
selon le type d'eau usée, par exemple de l'eau usée industrielle et/ou de l'eau usée sanitaire, l'eau usée à épurer peut être épurée dans une succession prédéterminée de végétaux de sortes différentes et
**en ce que** les végétaux sont situés en un emplacement défini du récipient (32) à végétaux et sont placés sur le fond du récipient à végétaux ou sur un film d'aquaculture au cas où le récipient à végétaux est doté d'un film d'aquaculture.

2. Installation d'épuration végétale selon la revendication 1, dans laquelle les végétaux prévus font partie des sortes de la liste ci-dessous :
Carex Riparia, et/ou
Carex Elata, et/ou
Carex Gracilis, et/ou
F2, croisement entre Carex Gracilis et Carex Elata, Juncus Inflexus, et/ou
Carex Acutiformis, et/ou
Scirpus Lacustris, et/ou
Iris Pseudacorus, et/ou
Carex Rostrata et/ou
Phragmitis Australis.

3. Installation d'épuration végétale selon la revendication 2, dans laquelle la succession de végétaux de différentes sortes prévus pour l'eau usée sanitaire est la suivante : (a) Juncus Inflexus, (b) Iris Pseudacorus, (c) F2, (d) Carex Elata, (e) Scirpus Lacustris et (f) Iris Pseudacorus.

4. Installation d'épuration végétale selon la revendication 3, dans laquelle les végétaux de la sorte (e) Sirpus Lacustris et de la sorte (f) Iris Pseudacorus sont disposés en mélange des deux.

5. Installation d'épuration végétale selon les revendications 3 ou 4, dans laquelle les végétaux de la sorte Juncus Inflexus, des végétaux de la sorte Carex Acutiformis sont disposés en succession et/ou en ce que les végétaux de la sorte Juncus Inflexus et des végétaux de la sorte Carex Acutiformis sont disposés en mélange des deux.

6. Installation d'épuration végétale selon la revendication 2, dans laquelle la succession de végétaux de différentes sortes prévue pour l'eau usée industrielle est la suivante :
(a) Carex Riparia, (b) Carex Elata, (c) Carex Rostrata, (d) Iris Pseudacorus, (e) Juncus Inflexus, (f) Scirpus Lacustris, (g) Iris Pseudacorus et éventuellement (h) F2.

7. Installation d'épuration végétale selon la revendication 6, dans laquelle les végétaux des sortes (b) Carex Elata et (c) Carex Rostrata sont disposés en mélange des deux et/ou en ce que les végétaux des sortes (f) Scirpus Lacustris et (g) Iris Pseudacorus sont disposés en mélange des deux et/ou en ce qu'aux végétaux de la sorte (d) Iris Pseudacorus et des végétaux de la sorte Carex Acutiformis peuvent être prévus en plus, de préférence dans un rapport numérique de 1:4.

8. Installation d'épuration végétale selon la revendication 2, dans laquelle la succession de végétaux de différentes sortes prévus pour l'eau usée sanitaire et l'eau usée industrielle est la suivante : (a) Phragmitis Australis, (b) Juncus Inflexus, (c) Carex Riparia, (d) Carex Elata, (e) Carex Rostrata, (f) Iris Pseudacorus, (g) Scirpus Lacustris, (h) F2 et éventuellement (i) Scirpus Lacustris.

9. Installation d'épuration végétale selon la revendication 8, dans laquelle les végétaux des sortes (d) Carex Elata et (e) Carex Rostrata sont disposés en mélange des deux.

10. Installation d'épuration végétale selon l'une des revendications 1 à 9, dans laquelle des végétaux d'une seule sorte sont disposés dans un bac (60, 68, 72, 82 à 88, 94, 96) à végétaux et/ou en ce que des végétaux d'au moins deux sortes sont placés en mélange des deux dans un bac (32, 64, 76, 90, 92, 98) à végétaux.

11. Installation d'épuration végétale selon l'une des revendications 1 à 10, dans laquelle au moins six bacs (60, 68, 72, 82 à 88, 94, 96) à végétaux sont prévus et présentent chacun des végétaux d'au moins une sorte, les sortes étant de préférence différentes.

12. Installation d'épuration végétale selon l'une des revendications 1 à 11, dans laquelle la direction d'écoulement de l'eau usée à épurer par rapport à la succession de végétaux de différentes sortes peut être modifiée, par exemple en amenant à un autre bac (90) à végétaux l'eau usée à épurer après qu'elle a traversé un bac (86) à végétaux au lieu d'être amenée dans le bac (88) à végétaux suivant en correspondance à la succession prédéterminée.

13. Installation d'épuration végétale selon l'une des revendications 1 à 12, dans laquelle au moins un moyen qui permet d'optimiser le degré de l'eau usée à épurer au moins pour un paramètre déterminé est prévu dans au moins un récipient (32) à végétaux et/ou dans un autre récipient (2, 24, 26, 146, 162, 172, 197) de l'installation (10) d'épuration végétale.

14. Installation d'épuration végétale selon la revendication 13, dans laquelle le moyen, de préférence vivant, présente un filtre (158, 163, 164) ou des parties (160) de filtre dont l'effet de filtration est basé sur l'utilisation de végétaux, d'organismes monocellulaires, d'organismes pluricellulaires et/ou de bactéries.

15. Installation d'épuration végétale selon la revendication 14, dans laquelle au moins une balle d'algues (158), en particulier de Cladophora Aegagropila, est prévue et en ce qu'au moins une balle (158) d'algues peut être disposée dans un bac à végétaux et/ou dans un autre bac (146) de l'installation (10) d'épuration végétale.

16. Installation d'épuration végétale selon les revendications 14 ou 15, dans laquelle au moins une fougère (163) et/ou au moins une mousse naturelle sont prévues en ce qu'au moins un végétal de fougère (163) et/ou une mousse naturelle peuvent être disposées dans un bac (162) à végétaux de l'installation (10) d'épuration végétale.

17. Installation d'épuration végétale selon l'une des revendications 13 à 16, dans laquelle le moyen présente des microbes et/ou des cyanobactéries qui peuvent être cultivées ou placées de préférence sur des végétaux de l'installation (10) d'épuration végétale et/ou en ce que du dioxyde de carbone (CO₂) est introduit ou soufflé dans l'eau usée à épurer, le dioxyde de carbone étant dissous dans l'air ambiant et/ou provenant de réactions chimiques qui se déroulent dans la halle ou dans le bâtiment.

18. Installation d'épuration végétale selon l'une des revendications 13 à 17, dans laquelle le moyen présente des filtres artificiels (156, 170).

19. Installation d'épuration végétale selon la revendication 18, dans laquelle au moins un filtre (170) est prévu dans un récipient à végétaux et/ou dans un autre récipient (162) et présente de l'argile, des feuilles de thé, du marc de café et/ou de la balle de riz.

20. Installation d'épuration végétale selon la revendication 19, dans laquelle le filtre (170) peut être réalisé de la façon décrite ci-dessous :
de l'argile séchée et fractionnée est mélangée avec des matériaux organiques tels que des feuilles de thé, du marc de café et/ou de la balle de riz et éventuellement de l'eau, pour former une pâte solide,
dans cette pâte, on forme un chapeau essentiellement cylindrique fermé à une extrémité,
ce moule est séché, par exemple au soleil et ensuite durci, par exemple en étant cuit dans un four à une température prédéterminée et
le filtre est entouré de paille et est placé sur un tas de fumier de bovin.

21. Installation d'épuration végétale selon la revendication 18, dans laquelle un filtre (160, 164), présente des graines de fruits d'un arbre, en particulier de l'arbre Moringa Oleifera, de préférence déchiquetées, et en ce que le filtre peut être configuré en ébauches (164) qui peuvent être placées dans un bac à végétaux et/ou dans un autre bac (162).

22. Installation d'épuration végétale selon l'une des revendications 13 à 21, dans laquelle au moins un filtre est prévu sur le fond d'un récipient à végétaux, d'un bac à végétaux et/ou d'un autre bac (162), dont le matériau de filtre est disposé de préférence entre le fond du récipient ou du bac et un tapis de filtre (166), le tapis de filtre (166) pouvant être rendu au moins partiellement perméable, au sens d'une membrane de filtre, vis-à-vis de l'eau usée à épurer.

23. Installation d'épuration végétale selon l'une des revendications 13 à 22, dans laquelle au moins un moyen (150, 152, 168) de guidage d'écoulement est prévu et permet d'obtenir la traversée de l'eau usée à épurer dans la direction horizontale et/ou verticale dans un bac (146, 162) et/ou un récipient à végétaux et/ou un bac à végétaux.

24. Installation d'épuration végétale selon la revendication 23, dans laquelle un moyen de guidage d'écoulement présente au moins deux plaques (168) disposées l'une à côté de l'autre et/ou l'une à la suite de l'autre, de préférence obliquement, et permettent de préférence au moins largement d'épurer l'eau usée au sens d'un principe d'épuration oblique, par exemple en amenant l'eau usée à épurer en direction d'un filtre disposé sur le fond du bac (162), une plaque (168) prévue pour l'eau usée à épurer pouvant être rendue au moins partiellement perméable.

25. Installation d'épuration végétale selon les revendications 23 ou 24, dans laquelle un moyen de guidage d'écoulement présente au moins deux plaques (150, 152) disposées l'une à côté de l'autre et/ou l'une à la suite de l'autre, de préférence essentiellement à la verticale, et sont disposées en particulier en alternance de manière à s'étendre depuis le haut jusqu'en dessous de la surface de l'eau et depuis le fond du bac vers le haut en direction de la surface de l'eau ou éventuellement au moins par partie jusqu'au-dessus de la surface de l'eau, de telle sorte que l'eau usée à épurer puisse être amenée en alternance dans la direction horizontale et dans la direction verticale à travers le bac (146).

26. Installation d'épuration végétale selon l'une des revendications 1 à 15, dans laquelle l'eau usée à épurer peut être chauffée pendant une durée prédéterminée à l'aide d'au moins un moyen de chauffage (176), de préférence à au moins 50 à 60 degrés Celsius pendant une durée d'au moins une heure.

27. Installation d'épuration végétale selon la revendication 26, dans laquelle le moyen de chauffage présente au moins un réchauffeur (192) qui peut être traversé par l'eau usée à épurer, le débit et/ou la vitesse d'écoulement de l'eau usée à épurer pouvant être prédéterminé et/ou contrôlé.

28. Installation d'épuration végétale selon les revendications 26 ou 27, dans laquelle le moyen de chauffage (176) présente au moins un circuit de chauffage ou une pompe à chaleur, en ce que le circuit de chauffage présente des conduits de raccordement (180), au moins un réchauffeur (178) traversé par l'écoulement, au moins un échangeur de chaleur (184) disposé dans un bac à végétaux et/ou dans un autre bac (172) et un fluide d'échange de chaleur, le fluide d'échange de chaleur pouvant être chauffé dans le réchauffeur (178) traversé par l'écoulement et amené vers l'échangeur de chaleur (184) par les conduits de raccordement (180) pour chauffer l'eau usée à épurer.

29. Installation d'épuration végétale selon la revendication 28, dans laquelle le fluide d'échange de chaleur présente un liquide ou un gaz et en ce que le fluide d'échange de chaleur peut être mis en circulation dans le circuit de chauffage au moyen d'une pompe (182).

30. Installation d'épuration végétale selon les revendications 28 ou 29, dans laquelle le réchauffeur traversé par l'écoulement présente un collecteur solaire (192) et/ou une machine disposée dans le bâtiment et qui en fonctionnement délivre de l'énergie thermique au fluide d'échange de chaleur mis en circulation dans le réchauffeur traversé par un écoulement et en ce que le collecteur solaire (192) peut présenter au moins un dispositif (207) de concentration optique de la lumière solaire.

31. Installation d'épuration végétale selon l'une des revendications 26 à 30, dans laquelle l'eau usée à épurer peut être chauffée selon le principe du bouilleur immergé, le courant électrique de chauffage d'une résistance thermique pouvant être produit à l'aide d'une installation photovoltaïque (202), de préférence dotée de cellules solaires (200) ou de photo-éléments.

32. Installation d'épuration végétale selon l'une des revendications 26 à 31, dans laquelle un collecteur solaire (192) et/ou une partie (200, 207) d'une installation photovoltaïque (202) sont disposés de manière à pouvoir être orientés sur la position effective du soleil.

33. Installation d'épuration végétale selon les revendications 31 ou 32, dans laquelle le courant électrique produit par l'installation photovoltaïque (202) peut alimenter également au moins un autre composant de l'installation d'épuration végétale, par exemple une pompe à eau (182) à entraînement électrique.

34. Installation d'épuration végétale selon l'une des revendications 31 à 33, dans laquelle le courant électrique produit par l'installation photovoltaïque (202) peut être accumulé dans au moins un accumulateur.

35. Installation d'épuration végétale selon l'une des revendications 26 à 34, dans laquelle l'eau usée à épurer peut être chauffée dans un bac (172, 197) ou dans un bac tampon qui peut être prévu au début et/ou à la fin de l'installation (10) d'épuration végétale dans la direction d'écoulement de l'eau usée à épurer.

36. Installation d'épuration végétale selon l'une des revendications 26 à 35, dans laquelle l'énergie thermique apportée à l'eau usée à épurer peut être utilisée au moins en partie pour le chauffage de bâtiments, par exemple à l'aide d'une pompe à chaleur prévue dans ce but.

37. Installation d'épuration végétale selon l'une des revendications 1 à 36, dans laquelle l'eau usée à épurer peut être épurée au moins partiellement par électrolyse, en particulier en prévoyant dans un récipient à végétaux ou dans un autre récipient (197) des conducteurs électriques (208) qui permettent d'amener du courant électrique.

38. Installation d'épuration végétale selon l'une des revendications 1 à 37, dans laquelle l'eau usée à épurer peut être épurée au moins en partie en y appliquant un rayonnement à haute énergie, en particulier de la lumière du spectre ultraviolet des longueurs d'onde et en ce que dans ce but, l'eau usée à épurer peut être amenée de préférence dans un bac (162) à faible profondeur d'eau et surface d'eau relativement grande.

39. Installation d'épuration végétale selon la revendication 38, dans laquelle la lumière ultraviolette du soleil (196) peut être utilisée et/ou dans laquelle la lumière ultraviolette peut être produite par au moins une lampe à UV.

40. Installation d'épuration végétale selon l'une des revendications 1 à 39, dans laquelle au moins un filtre en papier (156) qui peut présenter des vieux papiers déchiquetés, peut être prévu pour filtrer l'eau usée à épurer.

41. Installation d'épuration végétale selon l'une des revendications 1 à 40, dans laquelle un filtre ou une partie de filtre est dotée de matière crue finement hachée qui permet d'épurer au moins en partie l'eau usée à épurer.

42. Installation d'épuration végétale selon l'une des revendications 1 à 41, dans laquelle les moyens sont disposés en un emplacement prédéterminé de l'installation d'épuration végétale.

43. Installation d'épuration végétale selon l'une des revendications 1 à 42, dans laquelle le temps de séjour de l'eau usée à épurer dans un récipient à végétaux et/ou dans un autre récipient et/ou dans un bac à végétaux peut être prédéterminé de manière à obtenir un effet d'épuration pratiquement optimal.

44. Installation d'épuration végétale selon l'une des revendications 1 à 43, dans laquelle un dispositif d'amenée d'oxygène dans l'eau usée à épurer est prévu, le dispositif présentant une amenée d'eau usée, l'eau usée apportée par l'amenée d'eau usée tombant en chute libre sur une grille, l'eau usée pouvant être décomposée en gouttes, le dispositif pouvant présenter un boîtier qui entoure au moins la plus grande partie de la grille, l'eau usée traversant le dispositif pouvant poursuivre son traitement dans l'installation d'épuration végétale.

45. Procédé d'épuration d'eau usée présentant une installation d'épuration végétale, l'installation (10) d'épuration végétale présentant
un récipient (32) à végétaux,
une unité d'amenée (16), une unité d'évacuation (36) et des végétaux et étant configurée en particulier selon l'une des revendications 1 à 44,
l'eau usée à épurer pouvant être amenée à l'installation (10) d'épuration végétale par l'unité d'amenée (16),
l'eau usée épurée pouvant être évacuée de l'installation (10) d'épuration végétale à l'aide de l'unité d'évacuation (36),
les végétaux étant disposés dans le récipient (32) à végétaux et étant configurés de manière à être disposés sans substrat dans le récipient (32) à végétaux,
un récipient (32) à végétaux présentant de préférence au moins deux bacs (82-98) à végétaux,
au moins un autre récipient (20, 24, 26, 146, 162, 172, 186, 188, 197) pouvant être prévu,
au moins une partie du récipient (32) à végétaux étant disposée sur le toit (147) d'un bâtiment,
des végétaux d'au moins deux sortes différentes étant prévus dans le récipient (32) à végétaux et l'eau épurée étant épurée dans une succession prédéterminée de végétaux de différentes sortes en fonction de la nature de l'eau usée, par exemple de l'eau usée industrielle et/ou de l'eau usée sanitaire,
l'eau usée à épurer étant épurée par une succession prédéterminée de végétaux de différentes sortes,
les végétaux étant disposés en un emplacement défini du récipient (32) à végétaux et étant placés sur le fond du récipient à végétaux ou sur un film d'aquaculture au cas où le récipient à végétaux est doté d'un film d'aquaculture.
